# EUROPÄISCHE PATENTSCHRIFT

(11) **EP 3 454 109 B1**
(45) Veröffentlichungstag und Bekanntmachung des Hinweises auf die Patenterteilung: **27.05.2020**
(21) Anmeldenummer: 17190586.2
(22) Anmeldetag: 12.09.2017
(51) Int. Cl.: G02C 5/22

(54) **BRILLENGELENK, GELENKSET, BRILLENGESTELL, BRILLENGESTELLSET UND FEDERELEMENTVERWENDUNG**
EYEGLASS JOINT, JOINT SET, SPECTACLE FRAME, SPECTACLES FRAME SET AND SPRING ELEMENT USE
ARTICULATION DE LUNETTES, DISPOSITIF D'ARTICULATION, MONTURE DE LUNETTES, DISPOSITIF DE MONTURE DE LUNETTES ET UTILISATION DE L'ÉLÉMENT À RESSORT

(43) Veröffentlichungstag der Anmeldung: 13.03.2019
(73) Patentinhaber: ROLF - Roland Wolf GmbH, 6671 Weißenbach (AT)
(72) Erfinder: Iljazovic, Martin, 6600 Breitenwang (AT); Wolf, Roland, 6600 Lechaschau (AT); Wacker, Johannes, 6621 Bichlbach (AT)
(74) Vertreter: Vossius & Partner Patentanwälte Rechtsanwälte mbB

(56) Entgegenhaltungen:
- DE-A1- 19 710 924
- DE-U1- 29 815 893
- DE-U1-202013 006 158
- FR-A1- 2 690 760
- FR-A1- 3 033 414
- US-A1- 2016 033 790

## Beschreibung

Die Erfindung betrifft ein Brillengelenk für ein Brillengestell. Weiterhin betrifft die Erfindung ein Gelenkset zum konfigurierbaren Bilden eines Brillengelenks. Zudem betrifft die Erfindung ein Brillengestell und ein Brillengestellset. Außerdem betrifft die Erfindung zudem die Verwendung eines Federelements.

Herkömmliche Brillen weisen eine Fassung zum Halten jeweiliger Gläser und Brillenbügel zum Halten der Brille am Kopfe des Nutzers auf. Zwischen einer solchen Fassung und jeweils einem Brillenbügel ist meist ein einfaches Scharniergelenk vorgesehen. Dieses Scharniergelenk ist üblicherweise mittels eines Achsstifts, insbesondere in Form einer kleinen Schraube, verbunden. Die Schraube gibt eine Bewegungsachse des Scharniergelenks vor. Das Gelenk ermöglicht ein Aufklappen jeweiliger Brillenbügel um Diese Bewegungsachse, um die Brille auf den Kopf eines Brillenträgers aufsetzen zu können. Zum raumsparenden und sicheren Verstauen der Brille können die jeweiligen Brillenbügel entsprechend wieder zugeklappt werden, um diese zusammen auf oder nahe an die Fassung zu falten. Dadurch ist die Brille wesentlich flacher und kann beispielsweise raumsparend in einem passenden Etui verstaut werden. Auch wird so das Risiko vermindert, dass die Bügel brechen oder das Gelenk beschädigt wird. Nachteilig ist dabei jedoch, dass dieses Scharniergelenk bei einer Überstreckung beim Aufklappen, Überstauchung beim Zuklappen und/oder einer Kraft, welche quer zu einer durch die Bewegungsachse vorgegebenen Bewegungsebene wirkt, leicht beschädigt werden kann. Zudem kann ein solches Brillengelenk nicht an die individuellen Bedürfnisse unterschiedlicher Träger angepasst werden und erfordert eine präzise, aufwändige Fertigung, um weitestgehend spalt- und/oder spielfrei zu sein und einen sicheren Sitz der Brille zu gewährleisten.

Aus der EP 2 478 408 B1 ist ein Brillengelenk bekannt, bei welchem zwei Gelenkteile mit mindestens einer metallischen Verbindungsklammer miteinander verbunden sind. Dieses Gelenk soll dabei selbsttätig aus gewissen Gelenkstellungen in eine Benutzungsstellung und in eine Verstaustellung springen können. Zudem soll auch eine gewisse Überstreckung des Gelenkes ermöglicht werden, ohne dass dieses dabei unmittelbar beschädigt wird. Nachteilig an diesem Gelenk ist jedoch, dass es aufwendig zu montieren und zu warten ist. Insbesondere bei einer Überstreckung und/oder Bewegung des Gelenks, welche zu einer permanenten Verformung der Verbindungsklammer führt, kann dieses nicht mehr ohne Weiteres zurückverformt werden. Dann ist es für den Besitzer der Brille gegebenenfalls notwendig, diese zur Wartung bei einem Optiker abzugeben. Schließlich ist auch die Funktionalität des Gelenks verbesserungsfähig.

Auch von dem Designer Philippe Starck ist ein Brillengelenk bekannt, welches Bewegungen jeweiliger Brillenbügel relativ zu einer Fassung auch außerhalb einer durch eine einzelne Achse vorgegebenen Bewegungsebene erlauben soll. Beispielsweise sollen bei diesem Brillengelenk jeweilige Brillenbügel auch nach unten oder oben relativ zu der Fassung der Brille verdreht werden können, ohne dass es unmittelbar zu einer Beschädigung des Brillengelenks kommen soll. Dafür weist dieses Brillengelenk zwei Gelenkteile auf, welche an einer dazwischen gehaltenen Kugel gelagert sind. Weiterhin wird eines der Gelenkteile über eine Hülse mit einer metallischen Schraubendruckfeder gegen die Kugel verspannt, um eine selbsttätige Rückkehr in eine Ausgangslage zu bewirken. Dieses Brillengelenk erfordert also eine Vielzahl von Teilen und ist sowohl in Herstellung als auch in Montage komplex und teuer. Zudem kann dieses Brillengelenk von einem Benutzer auch nicht ohne Weiteres selbst gewartet werden. Insbesondere ist das Federelement des Gelenks in dem Brillenbügel einer jeweiligen Brille komplett versenkt, so dass es nicht von außen ohne Weiteres zugänglich ist. Schließlich ist auch die Funktionalität des Gelenks verbesserungsfähig.

Aus der US 2016/0033790 ist ein Brillengestell bekannt, bei dem ein O-Ring durch einen Durchbruch in der Fassung geführt und dort mittels eines omega-fönnigen Pins gehalten wird.

Aus der DE 202013006158 U1 ist ein Brillengestell bekannt, bei dem die Bügel mit der Fassung mittels Zugbändern befestigt sind.

Die DE 298 15 893 U1 betrifft eine Aufhängung für Brillengläser und Brillenbügel, bei der die Aufhängung mittels flexibler O-Ringe erfolgt.

Die DE 197 10 924 A1 betrifft einen Brillenrahmen mit zwei Verlängerungen, die sich von seitlichen Abschnitten weg erstrecken. Eine Riemenscheibe und eine Nocke werden drehbar an jeder der Verlängerungen gehalten und ein Paar Bügel ist an den Nocken befestigt, um auf diese Weise gemeinsam mit den Nocken gedreht zu werden.

Aufgabe der vorliegenden Erfindung ist es, ein verbessertes oder zumindest alternatives Brillengelenk für ein Brillengestell zu schaffen. Insbesondere soll ein Brillengelenk bereitgestellt werden, welches besonders robust und leicht zu handhaben ist. Weiterhin ist es eine bevorzugte Aufgabe der vorliegenden Erfindung, ein Gelenkset zum konfigurierbaren Bilden eines Brillengelenks zu schaffen, wodurch ein Brillengelenk leicht an unterschiedliche Bedürfnisse eines Brillenträgers angepasst werden kann. Auch ist es bevorzugte Aufgabe der vorliegenden Erfindung, ein Brillengestell zu schaffen, welches besonders robust und leicht zu handhaben ist. Eine weitere bevorzugte Aufgabe der vorliegenden Erfindung ist es, ein Brillengestellset zu schaffen, mittels welchem ein Brillengestell besonders gut an unterschiedliche Bedürfnisse eines jeweiligen Trägers angepasst werden kann. Zudem ist es bevorzugte Aufgabe der vorliegenden Erfindung, eine neuartige Verwendung eines Federelements zu schaffen.

Diese Aufgaben werden erfindungsgemäß durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen jeweils eines Gegenstands der Erfindung als vorteilhafte Ausgestaltungen der jeweils anderen Gegenstände der Erfindung und umgekehrt anzusehen sind.

Die Erfindung ist in den Ansprüchen definiert.

Da die zwei Gelenkteile mittels eines Federelements verbunden sind und nicht mittels einer starren Achse, kann das Brillengelenk auch nicht unmittelbar durch eine Bewegung außerhalb einer Bewegungsebene, welche sonst durch eine starre Achse vorgegeben ist, beschädigt werden. Bei dem Brillengelenk kann auf eine starre Achse verzichtet werden. Damit ist das Brillengelenk auch besonders einfach zu handhaben. Insbesondere kann es für jeweilige Brillenträger selbst möglich sein, das Brillengelenk zu warten, ohne dass dafür ein Optiker konsultiert werden muss. Im Gegensatz zu einem Scharniergelenk, bei welchem die beiden Gelenkteile mittels einer Schraube verbunden sind, tendiert das Brillengelenk zudem auch nicht zu einem Lösen aufgrund wiederholter Bewegungen der Gelenkteile relativ zueinander. Zudem resultiert eine Überdehnung und/oder Überstauchung nicht in einer dauerhaften Verformung des Gelenks, insbesondere bei Verwendung eines gummielastischen Federelements, welches dann eine Wartung und/oder Neuausrichtung der Brille an einem Träger erfordert.

Ein ringförmig geschlossenes Federelement ist besonders einfach und kostengünstig herstellbar. Zudem kann es besonders einfach an den jeweiligen Gelenkteilen befestigt werden. Auch ein gummielastisches Federelement ist besonders kostengünstig und zudem besonders robust bei großen Streckungen, insbesondere aufgrund von Gelenkstellungen außerhalb eines üblichen, durch Auf- und Zuklappen von Brillenbügeln vorgegebenen Bewegungsbereichs. Im Gegensatz zu beispielsweise einem metallischen Federelement kann sich ein gummielastisches Federelement weniger leicht permanent verformen und kann nach einer solchen Verformung kostengünstiger austauschbar sein. Außerdem kann ein Federelement aus einem gummielastischen Werkstoff leichter sein als eines aus einem metallischen Werkstoff, insbesondere bei gleichen oder geringerem Fertigungsaufwand und/oder gleicher oder höherer Robustheit.

Das Federelement kann beispielsweise aus einem Gummiwerkstoff gebildet werden. Als Material für das Federelement kann beispielsweise Naturkautschuk, Butadien-Acrylnitrilkautschuk, Styrol-Butadien-Kautschuk, hydrierter Nitrilkautschuk, Ethylen-Propylenkautschuk, thermoplastische Polyurethan-Elastomere und/oder Chloroprenkautschuk verwendet werden. Insbesondere kann das Federelement aus einem dieser Materialien oder einer Mischung daraus bestehen.

Die Fassung kann zum Halten jeweiliger Gläser der Brille ausgebildet sein. Die Brillenbügel des Brillengestells können als Ohrbügel und/oder Kopfbügel ausgebildet sein. Beispielsweise kann ein Brillenbügel dazu ausgebildet sein, ein Ohr eines Brillenträgers wenigstens teilweise zu umgreifen und damit die Brille auf dem Kopf des Trägers zu halten. Alternativ oder zusätzlich kann der Brillenbügel auch mit einer gewissen Spannung am Kopf des Trägers seitlich anliegen und damit ebenfalls ein Verrutschen der Brille nach vorne und/oder herunter von der Nase verhindern. Diese Spannung kann entsprechend durch das Brillengelenk beim Aufsetzen einer jeweiligen Brille auf den Kopf des Trägers erzeugt werden, insbesondere durch das Federelement. Dann kann auch auf eine entsprechende elastische Verformbarkeit der Brillenbügel verzichtet, oder diese zumindest reduziert werden. Bei dem Brillengelenk kann dies insbesondere bedeuten, dass während des Tragens der Brille das Federelement zu einem gewissen Grad gespannt wird und damit entsprechend die Brillenbügel gegen den Kopf des Trägers presst, beispielsweise auch durch eine leichte Überstreckung über eine aufgeklappte Stellung hinaus.

Vorzugsweise wird das Federelement an den beiden Gelenkteilen so befestigt, dass eine gewisse Vorspannung erzeugt wird, wodurch das erste und das zweite Gelenkteil mittels des Federelements gegeneinander gehalten werden. Insbesondere können die beiden Gelenkteile von dem Federelement jederzeit so gehalten werden, dass diese mit einer gewissen Vorspannkraft gegeneinandergedrückt werden und/oder wenigstens jeweils ein Teilbereich eines der Gelenkteile in Kontakt mit einem Teilbereich eines anderen der Gelenkteile steht. Vorzugsweise weist das Federelement eine progressive und im Wesentlichen stetige Federkennlinie auf. Das Federelement kann als Druck- oder Zugfeder ausgebildet sein, wobei das Federelement bevorzugt als Zugfeder ausgebildet ist. Durch das Vorsehen einer Zugfeder kann das Brillengelenk besonders kompakt und robust sein. Vorzugsweise ist keine Verbindung zwischen den beiden Gelenkteilen mit Ausnahme jeweiliger Federelemente vorgesehen. Dadurch ist die Konstruktion des Brillengelenks besonders einfach und robust.

Das Federelement kann beispielsweise lösbar an den jeweiligen Gelenkteilen befestigt sein. Dadurch kann das Brillengelenk demontiert werden. Zudem kann das Federelement so bei einer Beschädigung leicht ausgetauscht werden. Ebenso können so auch jeweilige Gelenkteile bei einer Beschädigung leicht ausgetauscht werden. Damit ist das Brillengelenk besonders einfach zu warten. Zudem kann ein verbautes Federelement so auch einfach gegen ein anderes Federelement, beispielsweise eines mit einer anderen Vorspannung, ausgetauscht werden, um das Brillengelenk an unterschiedliche Anforderungen anpassen zu können. Ebenso können so aber auch jeweilige Gelenkteile gegen Gelenkteile, mit oder ohne die jeweiligen Brillengestellteile wie beispielsweise Fassung oder Bügel, mit anderen Geometrien ausgetauscht werden, um ein Brillengelenk und/oder ein Brillengestell an unterschiedliche Anforderungen anpassen zu können.

Das Federelement kann beispielsweise auch als einfaches Band und/oder Schnur ausgebildet sein. Ein Querschnitt des Federelements kann beispielsweise eckig, insbesondere rechteckig, und/oder rund sein. Ein eckiger, insbesondere rechteckiger Querschnitt kann besonders einfach an den Gelenkteilen gehalten werden während ein runder Querschnitt gut an den Gelenkteilen gleiten und/oder besonders kostengünstig herstellbar und robust sein kann. Das Material des Federelements kann UV-beständig ausgebildet sein. Dafür kann beispielsweise ein Kautschukwerkstoff UV-beständig behandelt werden.

Die jeweiligen Gelenkteile können im Wesentlichen starr ausgebildet sein. Als Werkstoff für die jeweiligen Gelenkteile eignet sich beispielsweise Holz, Stein, Horn, Kunststoff und/oder Metall.

Das Brillengelenk weist, im Gegensatz zu einem üblichen Scharnier, mehr als einen Freiheitsgrad auf. Dadurch können ungewollte Bewegungen, welche nicht zu einem Verstellen des Gelenks zwischen einer Benutzungsstellung, in welcher eine entsprechende Brille auf dem Kopf eines Trägers gesetzt werden kann, und einer Verstaustellung, in welcher jeweilige Brillenbügel im Wesentlichen an der Fassung der Brille anliegen und/oder zusammengefaltet sind und die Brille beispielsweise leicht in einem Brillenetui verstaut werden kann, mit einer geringeren Wahrscheinlichkeit zu einer Beschädigung des Brillengelenks führen.

Das Brillengelenk kann im Folgenden auch einfach als Gelenk bezeichnet werden. Ein ringförmig geschlossenes gummielastisches Federelement kann auch als Gummiband oder Gummiring bezeichnet werden. Das Brillengelenk kann ausschließlich zwei Gelenkteile umfassen und keine weiteren Gelenkteile und/oder weiteren Verbindungselemente mit Ausnahme jeweiliger Federelemente umfassen.

In weiterer vorteilhafter Ausgestaltung des Brillengelenks ist es vorgesehen, dass mindestens eines der Gelenkteile, vorzugsweise beide Gelenkteile, jeweils ein Halteelement umfasst, an welchem das Federelement befestigt ist. Das Halteelement ist vorzugsweise zapfenartig und/oder hakenartig. Vorzugsweise ist das Federelement wenigstens bereichsweise um das Haltelement geschlungen. Dies ist eine konstruktiv besonders einfache und robuste Verbindung des Federelements mit den jeweiligen Gelenkteilen. Insbesondere kann das Federelement so leicht von den jeweiligen Gelenkteilen gelöst werden, beispielsweise durch ein einfaches Abziehen von den Halteelementen. Gehalten werden kann das Federelement dann insbesondere durch eine gewisse Vorspannung. Eine Vorspannung kann durch eine Dehnung des Federelements über eine ungedehnte, insbesondere schlaffe, Länge hinaus erzeugt werden. Eine zapfenartige Form ist dabei besonders kostengünstig zu fertigen und eine Montage und Demontage jeweiliger Federelemente ist besonders einfach. Eine hakenartige Form verhindert besonders gut ein ungewolltes Lösen des Federelements, insbesondere über einen besonders großen Gelenkstellungsbereich. Der Haken kann dabei so ausgebildet sein, dass das Federelement dennoch bei bestimmten Gelenkstellungen selbsttätig von dem Haken herunterspringt. Dadurch kann eine Beschädigung des Brillengelenks bei unzulässigen Gelenkstellungen vermieden werden.

Das erste Gelenkteil kann beispielsweise ein erstes Halteelement aufweisen und das zweite Gelenkteil ein zweites Halteelement. Die jeweiligen Halteelemente können symmetrisch zu einer Drehachse bzw. einem Drehpunkt des Gelenks, jeweiligen Kontaktflächen zwischen den Gelenkteile und/oder jeweiligen zueinander zugewandten Enden der Gelenkteile angeordnet sein. Insbesondere können die jeweiligen Halteelemente symmetrisch zu jeweiligen Kontaktflächen der beiden Gelenkteile miteinander angeordnet sein. Die jeweiligen Halteelemente können an beiden Gelenkteilen identisch ausgebildet sein. Die jeweiligen Halteelemente können mit jeweiligen Gelenkteilen einstückig und/oder integral ausgebildet sein.

Ein Halteelement an einem Gelenkteil kann weiter von einer Drehachse bzw. einem Drehpunkt des Gelenks, jeweiligen Kontaktflächen zwischen den Gelenkteile und/oder jeweiligen zueinander zugewandten Enden der Gelenkteile angeordnet sein als ein anderes Halteelement an dem anderen Gelenkteil. Beispielsweise kann das Halteelement an dem zweiten Gelenkteil weiter von einem Drehpunkt des Gelenks bzw. einem Drehbereich der Gelenkteile relativ zueinander beabstandet sein als ein entsprechendes Halteelement an dem ersten Gelenkteil. Dadurch kann ein vorhandener Bauraum besonders gut genutzt werden, um ein besonders langes Federelement zur Verfügung zu stellen. Ein langes Federelement ermöglicht dabei größere Dehnungen als ein kürzeres Federelement, ohne dass dabei das Federelement und damit das Brillengelenk beschädigt wird. Üblicherweise ist dabei an dem Brillenbügel mehr Platz vorhanden, um einen längeren Teil des Federelements dort anzuordnen als an einem Gelenkteil, welches der Fassung der Brille zugeordnet ist. Dort könnte ein längeres Federelementteil den Platz für das Vorsehen jeweiliger Brillengläser gegebenenfalls beschränken. Zusätzlich können fassungsseitig längere Gelenkteile dazu führen, dass eine Fassungshöhe in einem geschlossenen Zustand höher ist. Das heißt, bei zusammengefalteten Brillenbügeln kann dann der Abstand der Brillenbügel zur Fassung größer sein.

In weiterer vorteilhafter Ausgestaltung des Brillengelenks ist es vorgesehen, dass wenigstens eines der Gelenkteile mehrere voneinander beabstandete Halteelemente zum Befestigen des Federelements an unterschiedlichen Positionen an diesem Gelenkteil aufweist. Dadurch kann durch einen Wechsel des jeweiligen Halteelements zum Halten des Federelements leicht die Vorspannung des Federelements eingestellt werden. So kann je nach Wunsch des Trägers eine größere oder kleinere Kraft zum Öffnen und Schließen bzw. Auf- und Zuklappen der Brillenbügel, also einem Verstellen zwischen der Verstaustellung und der Benutzungsstellung, vorgesehen werden. Zudem kann so auch eine unterschiedliche Kraft vorgegeben werden, mit welcher sich die jeweiligen Brillenbügel an den Kopf des Trägers drücken. Zudem können so auch Federelemente unterschiedlicher Länge für das gleiche Brillengelenk verwendet werden, insbesondere ohne dabei die vorher geschilderten Betätigungskräfte zu verändern.

In weiterer vorteilhafter Ausgestaltung des Brillengelenks ist es vorgesehen, dass die beiden Gelenkteile durch das Federelement zu deren beweglichem Verbinden gegeneinander gespannt sind. Dadurch kann ein gewisser Kontaktbereich vorgegeben werden, um welchen sich die beiden Gelenkteile relativ zueinander bewegen und zudem ein Gelenkspalt minimiert werden, vorzugsweise in jeder Gelenkstellung. Dadurch kann zumindest in einem gewissen Bewegungsbereich eine Drehachse des Brillengelenks vorgegeben werden. Alternativ kann so auch ein Drehpunkt des Brillengelenks vorgegeben werden. Zudem sind so die beiden Gelenkteile im Wesentlichen in einer definierten relativen Position zueinander miteinander verbunden. Beispielsweise kann so eine definierte Lage und/oder Kontaktfläche der beiden Gelenkteile in der Benutzungsstellung und in der Verstaustellung vorgegeben werden. Dadurch ist das Brillengelenk von einer besonders hochwertigen Anmutung; insbesondere entsteht nicht der Eindruck, dass die beiden Gelenkteile wackeln und/oder nur lose miteinander verbunden sind. Durch die Minimierung des Gelenkspalts aufgrund der Vorspannung können zudem jeweilige Fertigungstoleranzen besonders groß sein, wodurch die Fertigung besonders kostengünstig und einfach sein kann.

In weiterer vorteilhafter Ausgestaltung des Brillengelenks ist es vorgesehen, dass eines der Gelenkteile einen Aufnahmebereich aufweist, auf welchem ein korrespondierender Abrollbereich des anderen der Gelenkteile während einer Gelenkbewegung abrollt und/oder abgleitet. Im Gegensatz zu beispielsweise einem Scharnier mit einem Achsstift und/oder einem Gelenk mit zwischen zwei Gelenkteilen angeordneter Kugel ist hier kein zusätzliches Bauteil zum Vorgeben der relativen Bewegung der Gelenkteile zueinander vorzusehen. Insbesondere kann so auf eine streng vorgegebene Achse der Bewegung des Gelenks verzichtet werden, welche bei von dieser Achse abweichenden Bewegungen das Gelenk schnell beschädigen können. Stattdessen wird die Bewegung des Gelenks durch Abrollen und/oder Abgleiten der Gelenkteile aneinander und die von dem Federelement erzeugte Anpresskraft und dessen dabei gegebenenfalls erfolgende Dehnung vorgegeben. Die Geometrie der Gelenkteile, insbesondere der Abroll- und Aufnahmebereiche, ermöglicht insbesondere eine gezielte Bewegung der Gelenkteile zueinander ebenso wie eine definierte Positionierung in Halte- bzw. Ruhestellungen, wie beispielsweise der Benutzerstellung und/oder Verstaustellung
Der Aufnahmebereich kann beispielsweise als Gelenkpfanne ausgebildet sein und der Abrollbereich als Gelenkkugel. Der Abrollbereich kann auch als Gleitbereich und/oder Abgleitbereich bezeichnet werden. Bei den beiden Bereichen kann es sich also um jeweilige Kontaktflächen zwischen den zwei Gelenkteilen handeln, welche wenigstens in gewissen Gelenkstellungen und/oder wenigstens bereichsweise miteinander kontaktiert sind.

Beispielsweise kann der Abrollbereich als ein Quadrat oder Quader mit gerundeten Ecken ausgebildet sein. Eine dieser gerundeten Ecken kann dabei in der Benutzungsstellung und/oder der Verstaustellung dem anderen Gelenkteil zugewandt sein. Entsprechend kann der Aufnahmebereich als korrespondierende, quadratische oder quaderförmige Aussparung in dem anderen Gelenkteil ausgebildet sein. Die gerundete Ecke des Abrollbereichs gleitet und/oder rollt dann an jeweiligen Flächen des Aufnahmebereichs ab und das Gelenk springt in entsprechende Stellungen, sobald jeweilige flache Bereiche der beiden quadratischen Formen annähernd in Anlage miteinander geraten und/oder sobald die Ecke einer Aussparung eines Aufnahmebereichs eine korrespondierende Ecke des Abrollbereichs passiert hat. Dadurch können jeweilige Brillenbügel in die jeweilige Endstellung der Verstaustellung und der Benutzungsstellung springen bzw. schnappen, insbesondere aus vorgegebenen Gelenkstellungsbereichen heraus. Diese Gelenkstellungsbereiche können jeweils einer dieser Stellungen zugeordnet sein und optional direkt aneinander angrenzen.

Eine alternative Ausführungsform ist beispielsweise ein zylinderförmiger Abrollbereich und eine korrespondierende zylinderförmige Ausnehmung als Aufnahmebereich. Durch eine solche Form des Abrollbereichs und des Aufnahmebereichs kann besonders gut ein Folgen der Gelenkbewegung einer (gedachten) Drehachse vorgegeben werden, wodurch beispielsweise eine Verdrehung und/oder ein Hoch- und/oder Herunterbiegen des Brillenbügels bei dessen Verstellen besonders gut vermieden werden kann, während eine solche abweichende Bewegung dennoch ohne Beschädigung des Gelenks zugelassen werden kann. Eine Hochrichtung kann beispielsweise durch eine Trageposition einer Brille mit dem Brillengelenk definiert sein. Zudem gleiten die beiden Gelenkteile bei einer solchen Ausführungsform besonders einfach und gleichmäßig aneinander ab. Dadurch ist das Brillengelenk insbesondere beim Verstellen zwischen unterschiedlichen Stellungen besonders einfach zu handhaben.

Es können auch vieleckige Formen als Aufnahmebereich und/oder Abrollbereich vorgesehen sein, beispielsweise eine sechseckige Grundform in einer Draufsicht auf das Gelenkteil. Dadurch kann ein jeweiliger Einrasteffekt in jeweiligen Endstellungen reduziert werden.

In weiterer vorteilhafter Ausgestaltung des Brillengelenks ist vorgesehen, dass der Aufnahmebereich und/oder der Abrollbereich jeweils wenigstens zwei Auflageflächen aufweist, insbesondere im Wesentlichen plane Auflageflächen, welche zueinander einen Winkel zwischen 75° und 105° aufweisen, vorzugsweise zwischen 87° und 93°. Insbesondere können die beiden planen Auflageflächen zueinander rechtwinklig sein. Bei mehr als zwei Auflageflächen können diese jeweils paarweise einen solchen Winkel zueinander aufweisen. Mittels der Auflageflächen können metastabile Gelenkstellungen definiert werden. Diese Gelenkstellungen sind beispielsweise durch das plane Aufliegen der Flächenpaare und die Vorspannung aufgrund des Federelements metastabil. Das heißt, das Brillengelenk kann diese Gelenkstellung nur bei Aufbringen einer äußeren, vorgegebenen Mindestkraft wieder verlassen und bleibt ansonsten in dieser Stellung.

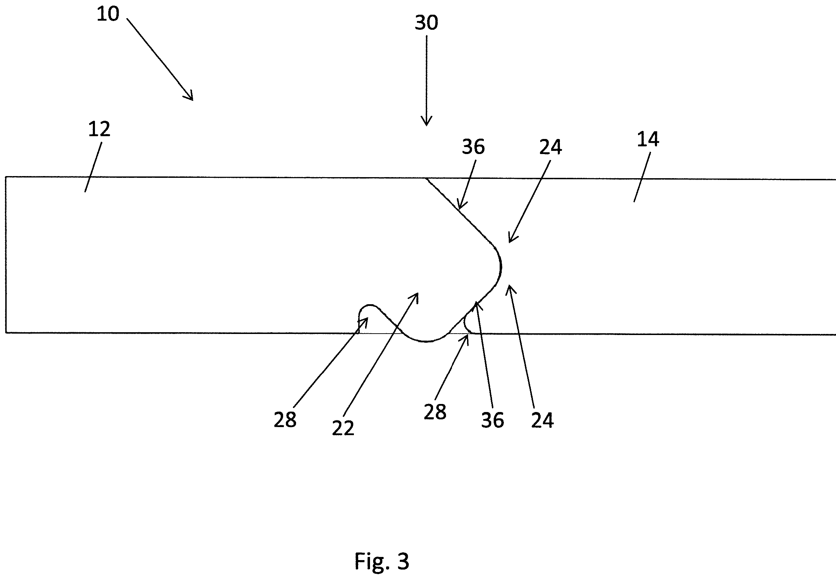

Bevorzugt ist wenigstens eine der, vorzugsweise beide, Anlageflächen - bevorzugt in einer Draufsicht im Wesentlichen senkrecht zur Bewegungsebene (vgl. Fig. 3) - geneigt zu mindestens einer Haupterstreckungsachse wenigstens eines der beiden Gelenkteile ausgerichtet, insbesondere in einer Benutzungsstellung und/oder einer Verstaustellung. Weiterhin bevorzugt ist die bzw. sind die jeweils andere der Anlageflächen auch geneigt zu der Haupterstreckungsachse wenigstens eines anderen der beiden Gelenkteile ausgerichtet, insbesondere in der Verstaustellung und/oder der Benutzungsstellung. Insbesondere zusätzlich oder alternativ dazu kann jede der Anlageflächen zu der Haupterstreckungsachse beider Gelenkteile sowohl in der Benutzungsstellung als auch in der Verstaustellung geneigt ausgerichtet sein. Die Neigung der Anlagefläche bezüglich der Haupterstreckungsachse ist dabei vorzugsweise nur von der Gelenkstellung bei dem Gelenkteil abhängig, an welchem die jeweilige Anlagefläche nicht ausgebildet ist. An dem Gelenkteil, an welchem die Anlagefläche ausgebildet ist, ist deren Neigung zu der entsprechenden Haupterstreckungsachse vorzugsweise unabhängig von der Gelenkstellung. Vorzugsweise ist mindestens eine der Haupterstreckungsachsen im Wesentlichen parallel zu einer Längsachse eines Brillenbügels, der mit dem zweiten Gelenkteil verbunden ist. Insbesondere können die Anlageflächen (hierbei bezogen auf den jeweils kleineren Winkel zur entsprechenden Achse) dabei jeweils um 30 bis 70° zu diesen Achsen in der Bewegungsebene geneigt sein, bevorzugt 40° bis 50°. Weiterhin bevorzugt ist der Winkel nicht 90°.

Insbesondere, zusätzlich oder alternativ zu den vorstehend genannten Merkmalen, bilden zwei an einem einzelnen Gelenkteil ausgebildete Anlageflächen vorzugsweise eine V-Form aus, insbesondere an dessen Abrollbereich bzw. Aufnahmebereich. Diese V-Form erstreckt sich vorzugsweise in der Bewegungsebene und deren Winkelhalbierende ist vorzugsweise im Wesentlichen parallel, bevorzugt bis etwa +/-20°, weiter bevorzugt bis +/-10° und ebenfalls bevorzugt bis +/5° geneigt (insbesondere in der Bewegungsebene) zu der Haupterstreckungsachse des Gelenkteils ausgebildet, an welchem die Anlageflächen ausgebildet sind. Vorzugsweise ist die Winkelhalbierende in der Benutzungsstellung oder in der Verstaustellung im Wesentlichen parallel, bevorzugt etwa +/-20° weiter bevorzugt +/-10° und ebenfalls bevorzugt +/5° geneigt (insbesondere in der Bewegungsebene) zu der Haupterstreckungsebene ausgebildet, an welchem die Anlagefläche nicht ausgebildet ist. Durch diese Gestaltung ergibt sich eine besonders gute Selbstjustierung des Brillengelenks. Zwei V-förmige Anlageflächen können dabei an beiden Gelenkteilen ausgebildet sein, wobei diese vorzugsweise zueinander korrespondieren.

Die Haupterstreckungsachse der jeweiligen Gelenkteile kann dabei durch deren Längserstreckung definiert sein. Insbesondere kann die Haupterstreckungsachse des zweiten Gelenkteils einer Längserstreckung des Brillenbügels im Wesentlichen entsprechen und die Haupterstreckungsachse des ersten Gelenkteils der Längserstreckung des Brillenbügels wenigstens in einer Stellung, in welcher das Brillengelenk so weit geöffnet ist, dass die beiden Gelenkteile im Wesentlichen auf einer Achse mit ihren Haupterstreckungsrichtungen liegen. Dabei kann es sich beispielsweise um die Benutzungsstellung handeln. Die Benutzungsstellung und Verstaustellung wird später noch weiter erläutert.

Zudem wird das Brillengelenk automatisch mittels des Federelements in die metastabilen Gelenkstellungen, insbesondere ab einer gewissen Annäherung an diese Gelenkstellung, selbsttätig verstellt. Dadurch kann beispielsweise ein Schnappen in die jeweiligen Endstellungen des Brillengelenks bewirkt werden. Dadurch kann das Brillengelenk beispielsweise selbsttätig in die Benutzungsstellung und/oder die Verstaustellung springen, wenn ein Träger das Brillengelenk in Richtung dieser Stellung verstellt. Die jeweiligen Auflageflächen können dabei unmittelbar aneinander angrenzen oder auch mittels eines gekrümmten Teilbereichs und/oder einer gerundeten Ecke miteinander verbunden sein. Insbesondere ein gekrümmter Teilbereich und/oder eine gerundete Ecke ermöglicht dabei ein besonders einfaches Abgleiten und/oder Abrollen der beiden Gelenkteile aneinander, wodurch ein Verstellen zwischen den zwei metastabilen Gelenkstellungen besonders einfach möglich ist.

In weiterer vorteilhafter Ausgestaltung des Brillengelenks ist es vorgesehen, dass das Brillengelenk dazu ausgebildet ist, dass sich eines der Gelenkteile relativ zu dem anderen der Gelenkteile im Wesentlichen in einer Bewegungsebene derart bewegen kann, dass das Brillengelenk zwischen einer Verstaustellung und einer Benutzungsstellung des Brillengestells verstellt werden kann. Die Verstaustellung kann dabei im Wesentlichen zusammengelegten Brillenbügeln entsprechen, wodurch eine entsprechende Brille beispielsweise platzsparend in einem Etui verstaut werden kann. In dieser Stellung können die zwei Haupterstreckungsachsen der beiden Gelenkteile zueinander beispielsweise einen Winkel von ca. 90° aufweisen. Die Benutzungsstellung kann im Wesentlichen auseinandergefalteten Brillenbügeln entsprechen. In der Benutzungsstellung kann eine Brille auf einen Kopf eines Trägers aufgesetzt werden bzw. getragen werden, insbesondere kann die Fassung auf der Nase eines Brillenträgers aufliegen, während jeweilige Brillenbügel den Kopf einfassen und wenigstens bereichsweise an jeweiligen Ohren anliegen. Vorzugsweise hat das Gelenk hierbei einen Öffnungswinkel von ca. 180°, insbesondere bezüglich jeweiliger Haupterstreckungsachsen der jeweiligen Gelenkteile. Die beiden vorgenannten bevorzugten Winkel entsprechen dabei einer Bauweise, in welcher die beiden Haupterstreckungsrichtungen der beiden Gelenkteile in der Benutzungsstellung im Wesentlichen auf einer Achse liegen. Das heißt, beide Gelenkteile bilden mit ihrer Haupterstreckungsrichtung in der Benutzungsstellung eine Verlängerung der Haupterstreckung des Brillenbügels. Alternativ kann beispielsweise auch das erste Gelenkteil mit seiner Haupterstreckungsrichtung im Wesentlichen in einer Haupterstreckungsebene der Brillenfassung bzw. jeweiliger Brillengläser angeordnet sein. In der Benutzungsstellung kann das Brillengelenk dann beispielsweise einen Winkel von ca. 90° zwischen den beiden Gelenkteilen ausbilden. In der Verstaustellung liegen die beiden Gelenkteile dann im Wesentlichen parallel zueinander, wodurch im Wesentlichen ein Gelenkwinkel von 0° gebildet wird. Der Gelenkwinkel kann dabei innenseitig an einer Seite gemessen werden, welche bei der Benutzung einer entsprechenden Brille dem Kopf des Trägers zugewandt ist.

Vorzugsweise sind die beiden Gelenkteile relativ zueinander wenigstens um 70° in der Bewegungsebene zum Verstellen zwischen der Verstaustellung und der Benutzungsstellung drehbar, besonders bevorzugt wenigstens 90° oder mehr. Bei der Bewegung zwischen der Benutzungsstellung und der Verstaustellung kann es sich um eine Rotation um eine Achse handeln, welche durch die Kontaktflächen der beiden Gelenkteile miteinander vorgegeben ist. Das Gelenk folgt aufgrund der Geometrien der Gelenkteile und einer durch das Federelement erzeugten Spannung beim Verstellen dann bevorzugt eine Rotation um diese Achse. Abweichung durch Querkräfte können aber möglich sein, entsprechend kann die Bewegungsebene oder Bewegungsachse als metastabil ausgebildet sein und/oder angesehen werden.

Bei der Bewegung zwischen der Benutzungsstellung und der Verstaustellung kann es sich um eine Überlagerung einer rotatorischen und translatorischen Bewegung handeln, welche insbesondere durch ein Abrollen und/oder ein Abgleiten der jeweiligen Gelenkteile aneinander vorgegeben werden kann. Die Bewegung zwischen der Verstaustellung und der Benutzungsstellung kann auch als Schwenkbewegung ausgebildet sein. Die Kinematik des Brillengelenks ist insbesondere durch die Geometrien der jeweiligen Gelenkteile vorgegeben, insbesondere jeweilige Geometrien des Aufnahmebereichs und des Abrollbereichs, und/oder durch das Federelement, insbesondere dessen Federkennlinie und die Vorspannung in einer und/oder beiden der Verstaustellung und der Benutzungsstellung.

In weiterer vorteilhafter Ausgestaltung des Brillengelenks ist es vorgesehen, dass die beiden Gelenkteile durch den Aufnahmebereich und den korrespondierenden Abrollbereich in der Bewegungsebene wenigstens teilweise relativ zu aneinander geführt sind. Durch diese Führung kann eine definierte Drehbewegung in der Bewegungsebene vorgegeben werden, wodurch das Brillengelenk besonders einfach zwischen der Benutzungsstellung und der Verstaustellung verstellt werden kann und somit leicht zu handhaben ist.

Beispielsweise kann diese Führung durch Anlageflächen an dem Aufnahmebereich oberhalb und/oder unterhalb korrespondierender Anlageflächen des Abrollbereichs in und/oder parallel zu dieser Ebene, also jeweilige Flächen insbesondere entlang einer Achse orthogonal zu der Ebene, gebildet werden. So kann beispielsweise ein quaderförmiger Abrollbereich oberhalb und unterhalb der Bewegungsebene gestützt werden. Während des Verstellens, optional auch in der Verstaustellung und/oder in der Benutzungsstellung, kann sich der Abrollbereich also an diesen Führungsflächen abstützen, so dass die beiden Gelenkteile relativ aneinander in der Bewegungsebene geführt sind. Diese Flächen, insbesondere deren Größe, und/oder jeweilige Passungen können dabei so ausgebildet sein, dass dennoch ein Verkippen eines der beider Gelenkteile zu dem anderen Gelenkteil aus der Bewegungsebene heraus ermöglicht wird, so dass es dabei nicht ohne Weiteres zu einer Beschädigung jeweiliger Gelenkteile und/oder des Federelements kommen kann. Dadurch wird das Brillengelenk dann auch bei unvorhergesehenen Belastungen, wie beispielsweise bei einem Drücken auf die Brille in der Verstaustellung oder bei einem Ablegen des Kopfes auf einem Kissen in der Benutzungsstellung mit einer darauf aufgesetzten Brille, vermieden.

In der Benutzungsstellung können die Gelenkteile im Wesentlichen bündig aneinander anschließen. Insbesondere können jeweilige Außenoberflächen bündig aneinander angrenzen. Es kann aber auch vorgesehen sein, dass nur jeweilige beim Tragen der Brille sichtbare Außenoberflächen bündig aneinander anschließen. Eine Kontaktfläche zwischen den beiden Gelenkteilen kann beispielsweise an einer dem Kopf des Trägers abgewandten Seite abgeschrägt sein und/oder die Gelenkteile können dort eine Überlappung aufweisen, beispielsweise auf Gehrung geschnitten sein, um so einen jeweiligen Gelenkspalt zu kaschieren.

In weiterer vorteilhafter Ausgestaltung des Brillengelenks ist es vorgesehen, dass die Gelenkteile, insbesondere der Aufnahmebereich und/oder der Abrollbereich, dazu ausgebildet sind, das Brillengelenk in der Verstaustellung und/oder der Benutzungsstellung zu stabilisieren, insbesondere mittels wenigstens eines Anschlags und/oder wenigstens einer Rastfläche am Aufnahmebereich und/oder Abrollbereich. Dadurch kann das Brillengelenk in der Verstaustellung und/oder der Benutzungsstellung einen metastabilen Zustand haben. Insbesondere einige oder alle Zwischenstellungen zwischen diesen beiden Stellungen können dabei instabil sein. Dabei kann es auch vorgesehen sein, dass das Federelement eine solche Vorspannung erzeugt, dass sich das Brillengelenk von den instabilen Zuständen automatisch in den metastabilen Zustand selbsttätig verstellt.

Jeweilige Anschläge können an jedem Gelenkteil vorgesehen sein oder nur an einem der beiden Gelenkteile. Ein Anschlag kann beispielsweise in Form von einer Kerbe und/oder einer Kante vorgesehen sein, beispielsweise an dem Abrollbereich und/oder dem Aufnahmebereich. Die jeweiligen Rastflächen können korrespondierend zueinander an beiden Gelenkteilen ausgebildet sein, so dass jeweils zwei korrespondierende Rastflächen Auflageflächen für einen metastabilen Zustand bilden. Die Rastflächen können entsprechend als Auflageflächen ausgebildet sein. Die Rastflächen können zu einem Anschlag korrespondieren und/oder Teil eines Anschlags sein. Die Rastflächen, jeweilige Anschläge und/oder auch eine Geometrie der Abrollbereiche und Aufnahmebereiche insgesamt können auch eine Arretierung des Brillengelenks in einem metastabilen Zustand, also insbesondere in der Benutzungsstellung und/oder in der Verstaustellung, bewirken. Beispielsweise kann eines der beiden Gelenkteile eine Nut aufweisen und ein anderes der beiden Gelenkteile einen korrespondierenden Vorsprung, welcher in der Benutzungsstellung und/oder in der Verstaustellung in der korrespondierenden Nut einrastet. Damit die Nut in die korrespondierende Aussparung bewegt werden kann, kann sich dabei das Brillengelenk insgesamt elastisch verformen. Diese elastische Verformung kann insbesondere durch eine elastische Verformung des Federelements bereitgestellt werden, so dass die elastische Verformung nicht durch die jeweiligen Gelenkteile bereitgestellt werden muss. Beispielsweise kann zum Einrasten eine Ausweichbewegung eines der Gelenkteile weg von dem anderen Gelenkteil unter zusätzlicher Dehnung des Federelements erfolgen. Dadurch können die beiden Gelenkteile besonders starr und robust sein, wodurch auch das Brillengelenk insgesamt besonders robust sein kann.

In weiterer vorteilhafter Ausgestaltung des Brillengelenks ist es vorgesehen, dass das Brillengelenk dazu ausgebildet ist, sich in einem ersten Gelenkstellungsbereich, insbesondere in einem ersten Winkelbereich in der Bewegungsebene, sich selbsttätig mittels des Federelements in die Verstaustellung zu verstellen und/oder das Brillengelenk dazu ausgebildet ist, sich in einem zweiten Gelenkstellungsbereich, insbesondere in einem zweiten Winkelbereich in der Bewegungsebene, sich selbsttätig mittels des Federelements in die Benutzungsstellung zu verstellen. Beispielsweise kann sich das Brillengelenk bei einer Gelenkstellung, welche näher an der Verstaustellung als an der Benutzungsstellung ist, sich selbstständig in die Verstaustellung verstellen. Entsprechend kann sich das Brillengelenk bei einem anderen Gelenkstellungsbereich näher zu der Benutzungsstellung selbsttätig in die Benutzungsstellung verstellen.

Beispielsweise kann aber auch vorgesehen sein, dass zumindest in einem Winkelbereich in der Bewegungsebene ein größerer Winkelbereich zu einem selbsttätigen Verstellen in die Verstaustellung führt als in die Benutzungsstellung. Beispielsweise kann vorgesehen sein, dass ein Benutzer der Brille das Brillengelenk wenigstens 70° aufklappen muss, bevor es selbsttätig in die Benutzungsstellung schnappt. Umgekehrt ist dann vorgesehen, dass der Benutzer das Brillengelenk nur lediglich ca. 20° zusammenklappen muss, bevor es selbsttätig in die Verstaustellung schnappt. Durch eine solche ungleichmäßige Metastabilität kann die Brille besonders komfortabel zu benutzen sein. Beispielsweise wird so sichergestellt, dass sich das Brillengelenk besonders frühzeitig in die schützende Verstaustellung verstellt. Umgekehrt kann natürlich auch vorgesehen sein, dass das Brillengelenk besonders früh in die Benutzungsstellung schnappt, so dass es für einen Brillenträger besonders einfach ist, die Brille aufzuklappen und aufzusetzen.

Bei dem Gelenkstellungsbereich kann es sich um bestimmte relative räumliche Stellungen der beiden Gelenkteile zueinander handeln. Die entsprechenden Winkelbereiche können beispielsweise durch die jeweiligen Geometrien des Abrollbereichs und/oder des Aufnahmebereichs vorgegeben werden, insbesondere durch jeweilige Auflageflächen und/oder Ecken, welche insbesondere gerundet ausgebildet sein können. Die jeweiligen Winkelbereiche können jeweilige metastabile Positionen des Brillengelenks definieren. Zudem können die jeweiligen Winkelbereiche auch durch die vorgesehene Vorspannung des Federelements vorgegeben bzw. eingestellt werden. Insbesondere kann das Federelement mit einer so hohen Vorspannung an den beiden Gelenkteilen befestigt werden, dass das Brillengelenk in keiner Stellung außerhalb der Benutzungsstellung und der Verstaustellung verbleibt. Das heißt, es gibt keinen weiteren metastabilen Bereich. Durch eine entsprechend hohe Vorspannung kann dabei ein Übergangsbereich zwischen den beiden Winkelbereichen so klein sein, dass bei einer üblichen Bewegung des Brillengelenks nicht damit zu rechnen ist, dass das Brillengelenk gewissermaßen versehentlich zwischen den beiden Stellungen bzw. Positionen stehen bleibt.

In weiterer vorteilhafter Ausgestaltung des Brillengelenks ist es vorgesehen, dass das Brillengelenk dazu ausgebildet ist, eine Bewegung der Gelenkteile relativ zueinander in der Bewegungsebene über die Verstaustellung und über die Benutzungsstellung hinaus zuzulassen, wobei das Brillengelenk dazu ausgebildet ist, selbsttätig mittels des Federelements in die Verstaustellung respektive die Benutzungsstellung zurückzukehren. Die Bewegung der Gelenkteile relativ zueinander über die Verstaustellung und/oder über die Benutzungsstellung hinaus kann auch als Überdehnung und/oder Überstreckung des Brillengelenks bezeichnet werden. Eine Bewegung über die Verstaustellung hinaus kann auch als Überstauchung bezeichnet werden. Bei einfachen Scharniergelenken kann beispielsweise bei einem zu weiten Aufklappen der jeweiligen Brillenbügel das Gelenk bzw. jeweilige Gelenkteile brechen und/oder permanent deformiert werden. Bei dem erfindungsgemäßen Brillengelenk mit dem Federelement kann stattdessen eine weitere Dehnung des Federelements erfolgen, da die beiden Gelenkteile lediglich damit miteinander verbunden sein können. Dadurch kommt es nicht unmittelbar zu einer Beschädigung des Brillengelenks, wenn die jeweiligen Brillenbügel zu weit aufgebogen werden und/oder zu weit zusammengepresst werden. Insbesondere erfolgt potenziell keine Beschädigung, da bei einer Überdehnung und/oder Überstauchung kein steifes Teil des Brillengelenks permanent deformiert wird.

Dadurch kann beispielsweise die Brille weiter komfortabel getragen werden, wenn ein Träger seinen Kopf seitlich auf ein Kissen ablegt. Ebenso kann die Brille so vor einer Beschädigung geschützt werden, wenn sie in einem Hemdausschnitt getragen wird und eine andere Person den Träger drückt und die Brille dabei zwischen den zwei Brustkörben eingeklemmt wird.

Vorzugsweise ist das Brillengelenk dazu ausgebildet, dass eine strukturelle Belastungsgrenze des Federelements bei wenigstens einer Gelenkstellung, insbesondere bei wenigstens einer überstreckten und/oder überstauchten Gelenkstellung, überschritten wird, während die strukturelle Belastungsgrenze anderer Teile, insbesondere der beiden Gelenkteile und/oder jeweiliger Halteelemente, noch nicht erreicht wird. Eine jeweilige strukturelle Belastungsgrenze des Federelements kann also geringer als eine Belastung in der überstreckten und/oder überstauchten Gelenkstellung sein, während eine strukturelle Belastungsgrenze der übrigen Teile größer sein kann. Dadurch kommt es bei einer Überlastung des Brillengelenks zunächst zu einem Bruch des Federelements, wodurch sich die Verbindung zwischen den Gelenkteilen löst und keine weiteren Kräfte mehr über das Gelenk übertragen werden. Dadurch werden andere Teile des Brillengelenks, insbesondere die beiden Gelenkteile und/oder jeweilige Halteelemente, vor Beschädigungen geschützt. Dadurch kommt es beispielsweise nur zu einem Reißen eines vergleichsweise preiswerten gummielastischen Federelements bei einer Überlastung, während die vergleichsweise teuren Gelenkteile unversehrt bleiben. Das Federelement kann dann einfach, schnell und kostengünstig ersetzt werden, wodurch das Brillengelenk also auch nach einer Beschädigung durch Überlastung kostengünstig und einfach repariert werden kann.

Alternativ oder zusätzlich kann das Brillengelenk so ausgebildet sein, dass eine strukturelle Belastungsgrenze jeweiliger Teile, insbesondere des Federelements, der beiden Gelenkteile und/oder jeweiliger Halteelemente bei einer maximalen überstreckten und/oder überstauchten Gelenkstellung noch nicht erreicht wird. Eine jeweilige strukturelle Belastungsgrenze jeweiliger Teile kann also höher sein als eine Belastung in der maximal überstreckten und/oder maximal überstauchten Gelenkstellung. Dadurch kann eine Beschädigung des Gelenks in jeweiligen Maximalstellungen vermieden werden. Hierzu kann insbesondere ein ausreichend stabiles und/oder dehnbares Federelement vorgesehen sein. Die maximal überstreckte und/oder maximal überstauchte Gelenkstellung kann dabei durch eine Bewegung in der Bewegungsebene definiert sein, welche dann durch ein Anliegen jeweiliger Teile begrenzt wird. Beispielsweise kann die maximal überstauchte Gelenkstellung erreicht sein, wenn jeweilige Brillenbügel innenseitig an der Brillenfassung und/oder Brillengläsern anliegen und eine weitere Bewegung blockieren. Ebenso kann eine maximal überstreckte Gelenkstellung erreicht sein, wenn das zweite Gelenkteil und/oder jeweilige Brillenbügel außenseitig an der Fassung und/oder dem ersten Gelenkteil anliegen. Eine solche aufgebogene Stellung kann auch einem näherungsweisen Öffnungswinkel des Gelenks von 360° entsprechen.

In weiterer vorteilhafter Ausgestaltung des Brillengelenks ist es vorgesehen, dass sich jeweilige zapfenartige und/oder hakenartige Halteelemente im Wesentlichen in der Bewegungsebene erstrecken und/oder sich eine durch die Ringform des Federelements definierte Ebene im Wesentlichen quer oder quer zu der Bewegungsebene erstreckt, insbesondere orthogonal dazu. Dadurch kann das Federelement einfach innerhalb der Bewegungsebene auf die Halteelemente aufgesteckt werden. Die Ebene, in welcher sich die Ringform des Federelements quer erstreckt, kann dabei bei gestrecktem Gelenk, also in der Benutzungsstellung, bei welcher jeweilige Gelenkteile zu 180° zueinander aufgeklappt sind, definiert sein. Ansonsten kann ein ringförmiges Federelement geknickt sein. Dann können alternativ zum Beispiel jeweilige Endpunkte die Ebene definieren.

Durch diese Orientierung des Federelements und/oder der Halteelemente können diese besonders einfach auf einer kopfzugewandten Seite des Brillengelenks angeordnet sein und beim Tragen der Brille entsprechend durch die beiden Gelenkteile verdeckt sein. Dadurch kann das Brillengelenk von außen beim Tragen der Brille ein besonders glattes Erscheinungsbild haben und zudem besonders gut vor Beschädigungen und/oder Verschmutzungen geschützt sein. Zudem kann so das Federelement besonders einfach auf die Halteelemente aufgesteckt werden. Zudem erlaubt eine solche Anordnung besonders einfach ein Vorsehen eines Abspringens des Federelements von den jeweiligen Halteelementen bei einem Überstrecken und/oder zu weitem Zusammenfalten des Brillengelenks über die Benutzungsstellung bzw. die Verstaustellung hinaus. Auch dadurch kann das Brillengelenk besonders gut vor Beschädigungen geschützt werden.

In weiterer vorteilhafter Ausgestaltung des Brillengelenks ist es vorgesehen, dass das Federelement im Wesentlichen auf den in der Verstaustellung einem Innenwinkel des Brillengelenks zugewandten Seiten der Gelenkteile angeordnet ist, insbesondere dort befestigt ist. Zusätzlich können auch die jeweiligen Halteelemente an diesen Seiten angeordnet sein. Die Seiten können auch als Innenseiten bezeichnet werden, welche dem Kopf des Trägers beim Tragen einer entsprechenden Brille zugewandt sind. Jeweilige Innenseiten können im zusammengeklappten Zustand des Brillengelenks zueinander zugewandt sein. Auch hierdurch sind die jeweiligen Halteelemente und/oder Federelemente beim Tragen der Brille besonders gut kaschiert. Außerdem sind die Halteelemente und das Federelement so besonders gut vor Verschmutzungen und Beschädigungen von außen geschützt. Insbesondere sind diese Teile im zusammengeklappten Zustand des Brillengelenks von den beiden Gelenkteilen geschützt, so dass eine entsprechende Brille verstaut werden kann, ohne dass dabei befürchtet werden muss, dass das Federelement beschädigt wird, beispielsweise durch ein Hängenbleiben an einer Etuikante.

In weiterer vorteilhafter Ausgestaltung des Brillengelenks ist es vorgesehen, dass der Aufnahmebereich und/oder der Abrollbereich eine Gleitschicht aufweist und/oder dazwischen wenigstens eine Gleithülse angeordnet ist. Mit einer Gleitschicht, beispielsweise in Form einer ausgehärteten Harzbeschichtung und/oder Teflonbeschichtung der jeweiligen Gelenkteile, kann der Verschleiß des Brillengelenks besonders gering sein. Durch die Verwendung einer Gleithülse können die Gelenkteile aus besonders weichen Materialien gebildet sein, ohne dass dabei ein Verschleiß des Brillengelenks befürchtet werden muss. Zudem können so auch jeweilige Gleiteigenschaften jeweiliger Kontaktflächen besonders gut sein, wodurch Reibung beim und Kraftaufwand zum Verstellen des Brillengelenks reduziert sein kann. Entsprechende Beschichtungen und/oder Hülsen können auch bei Kontaktstellen bzw. -flächen zwischen dem Federelement und den jeweiligen Gelenkteilen vorgesehen sein, beispielsweise an den Halteelementen. Auch dadurch kann ein Verschleiß des Brillengelenks durch eine relative Bewegung des Federelements zu den Gelenkteilen und daraus erfolgende Reibung besonders gering sein.

In weiterer vorteilhafter Ausgestaltung des Brillengelenks ist es vorgesehen, dass der Aufnahmebereich und/oder der Abrollbereich dazu ausgebildet sind, bei einer die beiden Bereiche gegeneinander drückenden Federkraft eine Selbstjustierung des Brillengelenks zu Bewirken. Beispielsweise kann das Federelement eine Vorspannung aufweisen, mittels welcher die beiden Gelenkteile gegeneinander gespannt sind und welche auch den Aufnahmebereich gegen den Abrollbereich drückt. Die Selbstjustierung kann eine Rückstellung in eine vorgegebene Ausgangslage bedeuten. Beispielsweise können durch die Geometrie des Aufnahmebereichs und des Abrollbereichs und aufgrund eines gespannten Federelements sich die beiden Gelenkteile in ihrer räumlichen Position zueinander ausrichten, wodurch sich das Brillengelenk selbsttätig justiert. Dafür können Beispielswiese zwei quer zueinander ausgerichtete Paare von Anlagenflächen vorgesehen sein, an welchen die Gelenkteile aufliegen. Wenigstens eine der Anlageflächen kann sich dabei quer zu einer Haupterstreckungsachse wenigstens eines der beiden Gelenkteile in der Benutzungsstellung und eine andere der Anlageflächen quer zu der Haupterstreckungsachse wenigstens eines der beiden Gelenkteile in der Verstaustellung ausgerichtet sein. Alternativ oder zusätzlich kann der Aufnahmebereich ein keilförmiges Segment aufweisen und der Abrollbereich eine korrespondierende Aussparung. Beispielsweise kann ein quaderförmiger Abrollbereich und ein korrespondierender Aufnahmebereich durch die zueinander abgewinkelten Flächen jedes Bereichs eine Selbstjustierung bewirken. Es muss also keine Verformung jeweiliger Gelenkteile zur Gelenkjustierung erfolgen, wie das bei herkömmlichen Scharniergelenken für Brillen häufig der Fall ist. Insbesondere kann sich das Brillengelenk in der Verstaustellung und/oder der Benutzungsstellung selbst justieren, was zum platzsparenden Verstauen der Brille und/oder für eine komfortable Benutzung der Brille besonders vorteilhaft ist.

In weiterer vorteilhafter Ausgestaltung des Brillengelenks ist es vorgesehen, dass das Brillengelenk dazu ausgebildet ist, eine Bewegung der Gelenkteile relativ zueinander in allen Freiheitsgraden zuzulassen, wobei die Gelenkteile beim Auslenken aus der Bewegungsebene und/oder Rotieren um eine Achse, insbesondere in der Bewegungsebene, selbsttätig mittels des Federelements zurück in eine Ausgangslage in der Bewegungsebene bewegt werden. Bei der Ausgangslage kann es sich insbesondere um die Verstaustellung und/oder die Benutzungsstellung handeln, aber auch um eine andere Stellung in der Bewegungsebene. Das Brillengelenk ermöglicht es so, die beiden Gelenkteile aus Versehen in eine von der Bewegungsebene abweichende Ebene zu bewegen, ohne dass das Brillengelenk beschädigt wird. Eine solche ungewollte Bewegung wird im Wesentlichen nur begrenzt durch eine Bruchdehnung des Federelements und/oder eine strukturelle Überlastung der jeweiligen Gelenkteile, welche beispielsweise durch deren Festigkeit vorgegeben sein kann. Insbesondere ein gummielastisches Federelement kann dabei in alle Freiheitsgrade verformt werden und formt sich dennoch selbsttätig zurück in seine Ausgangslage. Ebenso kann es vorgesehen sein, dass die beiden Gelenkteile relativ zueinander auseinandergezogen werden, wobei dann beispielsweise nicht, wie bei einem Scharniergelenk, ein Achsstift droht zu brechen, sondern zunächst lediglich das Federelement reversibel gestreckt wird.

Eine jeweilige geometrische Gestaltung des Abrollbereichs und/oder des Aufnahmebereichs kann dabei eine Rückstellwirkung unterstützen, zum Beispiel durch jeweilige Anlageflächen, die außerhalb der metastabilen Positionen nicht mehr im Wesentlichen plan aufliegen und zusammen mit dem durch aus diesen Stellungen verstellten und somit zusätzlich gedehnten Federelement eine Rückstellung bewirken. Insgesamt kann so ein Brillengelenk gebildet werden, das metastabile Positionen nur in einer Ebene zum Bewegen zwischen der Verstaustellung und der Benutzungsstellung aufweist und ansonsten selbsttätig in diese Ebene bzw. in die Verstaustellung und die Benutzungsstellung mittels des Federelements verstellt wird.

In weiterer vorteilhafter Ausgestaltung des Brillengelenks ist das Brillengelenk derart ausgebildet, dass sich das Federelement bei Überschreitung eines maximal zulässigen Bewegungsbereichs in zumindest einem Freiheitsgrad selbsttätig von zumindest einem der Gelenkteile löst. Der maximal zulässige Bewegungsbereich kann dabei durch die Benutzungsstellung und/oder die Verstaustellung definiert sein. Zum Beispiel kann der maximale zulässige Bewegungsbereich einer Bewegung in der Bewegungsebene zwischen der Verstaustellung und der Benutzungsstellung entsprechen. Beispielsweise kann wenigstens eines der Halteelemente an einem Gelenkteil so angeordnet sein, dass das Federelement bei Überschreitung des maximal zulässigen Bewegungsbereichs von dem Halteelement rutscht. Beispielsweise kann das Halteelement so ausgerichtet sein, dass bei einer Überstreckung des Brillengelenks die durch Dehnung des Federelements erzeugte Kraft ein Abrutschen des Federelements von dem zapfenartigen Halteelement bewirkt. Dadurch lösen sich dann die beiden Gelenkteile voneinander, bevor es zu einer Beschädigung des Federelements durch eine unzulässige Dehnung kommt und/oder bevor die Gelenkteile durch eine zu starke Federkraft strukturell überlastet werden. Dadurch kann das Brillengelenk besonders gut vor Beschädigungen geschützt werden. Dafür kann eine entsprechende Geometrie der Halteelemente vorgesehen sein, zum Beispiel durch entsprechende Krümmungen und/oder Hinterschneidungen. Der zulässige Bewegungsbereich kann dabei wesentlich größer sein als durch die Benutzungsstellung und die Verstaustellung vorgegeben. Dadurch wird vermieden, dass sich das Brillengelenk bereits bei kleinen Überschreitungen zum Schutz teilweise selbst demontiert. Beispielsweise kann bei einer Bewegung von 20° oder mehr über die Benutzungsstellung hinaus in der Bewegungsebene ein Ablösen des Federelements von dem Halteelement vorgesehen sein, um so das Brillengelenk vor Beschädigungen zu schützen.

In weiterer vorteilhafter Ausgestaltung ist es vorgesehen, dass das Federelement lösbar mit dem ersten Gelenkteil und/oder dem zweiten Gelenkteil verbunden ist. So kann das Federelement leicht ausgewechselt und/oder repariert werden. Insbesondere kann das Brillengelenk so leicht zerlegt werden. Bei nur einer einseitig vorgesehenen Lösbarkeit ist das Brillengelenk besonders leicht zu handhaben und die beiden Gelenkteile besonders einfach voneinander zu lösen und wieder miteinander zu verbinden. Bei einer beidseitigen Lösbarkeit ist die Konstruktion besonders einfach und jeweilige Federelemente können besonders einfach ausgetauscht werden. Beispielsweise kann ein ringförmiges gummielastisches Federelement einfach auf zwei zapfenförmige Elemente aufgezogen und auch von diesen wieder heruntergezogen werden. Durch die Lösbarkeit des Federelements können natürlich auch jeweilige Gelenkteile leicht ausgetauscht werden.

In weiterer vorteilhafter Ausgestaltung des Brillengelenks ist es vorgesehen, dass das erste Gelenkteil und/oder das zweite Gelenkteil wenigstens eine Aussparung, insbesondere eine Nut und/oder eine Durchgangsöffnung, aufweisen, in welcher das Federelement und/oder jeweilige Halteelemente wenigstens teilweise angeordnet sind. Dadurch kann das Federelement besonders sicher aufgenommen werden und ist so vor äußeren Beschädigungen besonders gut geschützt. Ebenso können jeweilige Halteelemente so beispielsweise vor einem Abbrechen durch ein Hängenbleiben oder eine unzulässige unmittelbare Belastung der Halteelemente von außen geschützt werden. Jeweilige Lasten können so auf die in Nuten angeordnete Halteelemente im Wesentlichen nur durch das Federelement aufgebracht werden. Eine Nut kann dabei wenigstens ein Teil eines Rings und/oder einer Aussparung bilden, in deren Mittenbereich dann das Halteelement angeordnet ist. Mit der Durchgangsöffnung kann insbesondere verhindert werden, dass das Federelement von beiden Gelenkteilen gleichzeitig abspringt und so verloren geht.

Durch jeweilige Nuten, Durchgangsöffnungen und/oder auch Hinterschneidungen kann das Federelement in Bereichen außerhalb des Halteelements zusätzlich abgestützt werden. Dadurch kann beispielsweise sichergestellt werden, dass das Federelement auch im zusammengefalteten Zustand bzw. in der Verstaustellung des Brillengelenks weiterhin eine gewisse Vorspannkraft ausübt, indem beispielsweise ein Mindestradius für die Krümmung des Federelements vorgegeben werden kann. So kann das Federelement beispielsweise einer Kontur der jeweiligen Gelenkteile auch in der Verstaustellung folgen.

Die Nut kann dabei innenseitig in den jeweiligen Gelenkteilen vorgesehen sein, um so das Federelement vor Beschädigungen besonders gut zu schützen. Alternativ kann die Nut auch so angeordnet sein, dass diese beim Tragen einer entsprechenden Brille zu sehen ist. Damit ist auch das Federelement zu sehen und entsprechend als Designelement einsetzbar. Darüber hinaus kann so leicht eine Beschädigung des Federelements visuell überprüft werden. Bei der innenseitigen Anordnung ist das Federelement dagegen kaschiert und vor Umwelteinflüssen geschützt, insbesondere gelangt so nur besonders wenig UV-Licht zu dem Federelement. Eine Nut bzw. Aussparung und/oder Durchgangsöffnung kann im Wesentlichen einer Erstreckung des Federelements in den beiden Gelenkteilen entsprechen. Eine Aussparung bzw. Nut und/oder Durchgangsöffnung kann wenigstens teilweise ringförmig ausgebildet sein und in einer Ebene quer, insbesondere orthogonal, zur Bewegungsebene verlaufen.

In weiterer vorteilhafter Ausgestaltung des Brillengelenks ist es vorgesehen, dass das erste Gelenkteil und/oder das zweite Gelenkteil wenigstens ein Auflageelement, insbesondere in Form einer Hinterschneidung an einer Aussparung, aufweist, an welchem sich das Federelement nur in einem bestimmten Gelenkstellungsbereich abstützt. Das Auflageelement kann dazu dienen, eine Mindestdehnung des Federelements auch in einem zusammengeklappten Zustand des Brillengelenks sicherzustellen und/oder eine Kraftumlenkung des gedehnten Federelements zu bewirken. Bei einem Aufeinanderzubewegen der beiden Gelenkteile beim Zuklappen kann ansonsten beispielsweise eine direkte Verbindung zwischen den zwei Halteelementen, insbesondere von einem Aufnahmebereich bzw. Abrollbereich beabstandet, verlaufen, so dass das Federelement keine ausreichende Vorspannkraft mehr auf die Gelenkteile ausübt, um diese nahezu spaltfrei aneinanderzuhalten. Beispielsweise kann so sichergestellt werden, dass das Federelement und die beiden Gelenkteile auch im zusammengeklappten Zustand im Wesentlichen eine V-Form bilden und nicht nur die Gelenkteile eine V-Form bilden und das Federelement diese V-Form in Form eines Dreiecks schließt.

In weiterer vorteilhafter Ausgestaltung des Brillengelenks ist es vorgesehen, dass die Gelenkteile mittels wenigstens zwei jeweils an beiden Gelenkteilen befestigter Federelemente beweglich miteinander verbunden sind. Durch das Vorsehen von zwei oder mehr Federelementen können diese getrennte Funktionen bei dem Brillengelenk übernehmen und/oder besonders hohe Vorspannkräfte und/oder hohe Kräfte bei einer kleinen Dehnung vorgesehen werden. Beispielsweise kann das eine Federelement die Vorspannung in der Verstaustellung im Wesentlichen bestimmen und das andere Federelement die Vorspannung in der Benutzungsstellung. Dadurch kann die Verbindung zwischen den beiden Gelenkteilen in unterschiedlichen Stellungen unterschiedlich steif sein. Zudem können so unterschiedliche Kräfte vorgegeben werden, die benötigt werden, um das Brillengelenk auf- oder zuzuklappen. Zudem ist das Brillengelenk so hinsichtlich jeweiliger Vorspannungen in jeweiligen Positionen konfigurierbar. Ebenso können durch unterschiedliche Federelemente jeweilige Winkelbereiche zum selbsttätigen Verstellen des Brillengelenks unterschiedlich vorgegeben werden.

In weiterer vorteilhafter Ausgestaltung des Brillengelenks ist es vorgesehen, dass die wenigstens zwei Federelemente gemeinsam in einer Aussparung an dem ersten Gelenkteil und/oder dem zweiten Gelenkteil angeordnet sind. Bei der Aussparung kann es sich um eine wie oben beschriebene Nut handeln. Ebenso kann dann ein wie oben beschriebenes Auflageelement vorgesehen sein, wobei sich an diesem Auflageelement dann beispielsweise nur ein erstes Federelement abstützt und das zweite Federelement stützt sich über das erste Federelement an dem Auflageelement ab. In der Aussparung können die Federelemente aneinander anliegen. Dadurch ist das Brillengelenk trotz mehrerer Federelemente besonders kompakt.

In weiterer vorteilhafter Ausgestaltung des Brillengelenks ist es vorgesehen, dass eines der wenigstens zwei Federelemente bei gleicher Dehnung eine andere Spannung aufweist als ein anderes der wenigstens zwei Federelemente. Diese andere Spannung kann beispielsweise durch die Verwendung eines anderen Materials, das Vorsehen eines anderen Elastizitätsmoduls, eines anderen Querschnitts, andere Wärmebehandlung, andere Vordehnung und/oder unterschiedlich ungedehnte Längen der Federelemente vorgesehen werden. Dadurch ist das Brillengelenk besonders gut konfigurierbar, insbesondere hinsichtlich der unterschiedlichen Stellungen und der unterschiedlichen Vorspannungen.

In weiterer vorteilhafter Ausgestaltung des Brillengelenks ist es vorgesehen, dass das erste Gelenkteil, das zweite Gelenkteil und/oder jeweilige Federelemente aus natürlichen Werkstoffen bestehen, insbesondere aus Pressholz, Stein, Horn oder Kautschuk. Insbesondere das Federelement kann aus Naturkautschuk bestehen. Pressholz kann dabei auch als Panzerholz bezeichnet werden, wobei es sich um einen Holzschichtaufbau mit Harz handeln kann. Als Stein kann beispielsweise Granit, Marmor oder Schiefer vorgesehen werden. Kautschuk ist ein besonders geeigneter Werkstoff zum Bilden eines gummielastischen Federelements. So ist es möglich, natürliche und/oder nachwachsende Ressourcen zu nutzen. Insbesondere kann das Brillengelenk frei von Metallen sein, wodurch es besonders natürlich anmuten kann. Zudem kann so auf einen Korrosionsschutz verzichtet werden. Außerdem kann die Brille so einfach recycelt werden, beispielsweise durch Kompostierung.

In weiterer vorteilhafter Ausgestaltung des Brillengelenks ist es vorgesehen, dass das erste Gelenkteil als Fassung des Brillengestells ausgebildet ist und/oder das zweite Gelenkteil als Brillenbügel des Brillengestells. Alternativ können aber auch das erste Gelenkteil mit der Fassung des Brillengestells verbunden sein und das zweite Gelenkteil mit dem Brillenbügel des Brillengestells, beispielsweise mittels einer Verklebung und/oder Verschraubung. Vorzugsweise sind jedoch die jeweiligen Gelenkteile einstückig und/oder integral mit der Fassung respektive den jeweiligen Brillenbügeln des Brillengestells ausgebildet. Dadurch kann auf zusätzliche Teile verzichtet werden. Das Brillengestell ist so besonders kostengünstig zu montieren und kann so zudem besonders klein, leicht und robust sein.

Ein zweiter Aspekt der Erfindung betrifft ein Gelenkset zum konfigurierbaren Bilden eines Brillengelenks gemäß dem ersten Aspekt der Erfindung. Entsprechend sind die sich aus dem ersten Aspekt der Erfindung ergebenden Merkmale und Vorteile der Beschreibung des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Das Gelenkset umfasst vorzugsweise mehrere unterschiedliche Federelemente, welche zum Konfigurieren des zu bildenden Brillengelenks auswählbar sind, wobei sich die unterschiedlichen Federelemente insbesondere hinsichtlich ihrer Spannung bei gleicher Dehnung unterscheiden und/oder hinsichtlich ihrer Länge in einem ungedehnten Zustand. Alternativ oder zusätzlich umfasst das Gelenkset mehrere unterschiedliche erste Gelenkteile und/oder mehrere unterschiedliche zweite Gelenkteile, welche zum Konfigurieren des zu bildenden Brillengelenks auswählbar sind, wobei sich die unterschiedlichen ersten und/oder unterschiedlichen zweiten Gelenkteile insbesondere hinsichtlich einer Geometrie ihres Aufnahmebereichs bzw. Abrollbereichs unterscheiden.

So kann das Brillengelenk beispielsweise hinsichtlich der Verstaustellung und/oder Benutzungsstellung, jeweiligen Kräften, mittels welchen es sich selbsttätig bewegt, wie beispielsweise Rückstellkräften, und benötigten Kräften zum Öffnen und/oder Schließen an die Wünsche eines Benutzers angepasst werden. Insbesondere dadurch, dass das Gelenk auch von einem Brillenträger ohne Hilfe eines Optikers zusammengebaut und zerlegt werden kann, kann dieser ein Brillengelenk selbst an seine persönlichen Wünsche anpassen. Beispielsweise kann ein Brillenbesitzer so selber das Federelement austauschen, wenn ihm die Kräfte zum Öffnen und Schließen der Brille zu groß sind. Ebenso kann der Brillenbesitzer so leicht selbst anpassen, mit welcher Vorspannkraft jeweilige Brillenbügel an seinen Kopf zum Halten der Brille angedrückt werden. Gerade älteren und schwachen Personen kann so das Tragen einer Brille erleichtert werden, während für sportliche Personen ein ausreichender Brillenhalt bereit gestellt werden kann.

Beispielsweise kann das Gelenkset mehrere Federelemente umfassen, welche jeweils eine unterschiedliche Gummimischung und/oder eine unterschiedlich ungedehnte Länge aufweisen. Bevorzugt haben jeweilige Federelemente den gleichen Querschnitt, damit diese immer gleichmäßig in die Gelenkteile passen und/oder an den Halteelementen befestigt werden können. Die Querschnitte jeweiliger Federelemente können aber auch unterschiedlich sein, um beispielsweise einen jeweiligen Einbau in Gelenknuten zu erleichten und/oder den Halt an den Gelenkteilen zu erhöhen. Zudem können so auch bei gleichem Materialeinsatz einfach unterschiedliche Federkennlinien vorgegeben werden. Das Gelenkset kann beispielsweise mehrere unterschiedliche Gummis und/oder unterschiedliche Gelenkteile umfassen. Die jeweiligen Federelemente können dabei wenigstens teilweise fest an einem der Gelenkteile befestigt werden, so dass das jeweilige Federelement auch gemeinsam mit einem zugeordneten Gelenkteil ausgetauscht werden kann.

Falls die Gelenkteile einstückig mit der Fassung und/oder den Brillenbügeln ausgebildet sind, kann die Brille so auch schnell und einfach hinsichtlich unterschiedlicher Anwendungszwecke konfiguriert werden. Beispielsweise kann eine Fassung mit normalen Gläsern gegen eine Fassung mit Lesegläsern ausgetauscht werden. Ebenso können jeweilige Brillenbügel für ein normales Tragen gegen jeweilige Brillenbügel für eine Sportanwendung ausgetauscht werden. Das Gelenkset kann dabei für einen Heimanwender ausgelegt sein, also beispielsweise einen jeweiligen Besitzer einer Brille. Insbesondere ist es nicht notwendig, zum Konfigurieren des Brillengelenks einen Optiker hinzuzuziehen und/oder Werkzeug zu nutzen, insbesondere Spezialwerkzeug.

Es kann jedoch auch ein dem Brillengelenk zugehöriges Spezialwerkzeug zur Verfügung gestellt werden, um Montage und Wartung weiter zu erleichtern. Insbesondere kann das Werkzeug dazu ausgebildet sein, das Federelement von jeweiligen Halteelementen zu ziehen und/oder auf diese aufzufädeln. Das Werkzeug kann aus einem Material bestehen, welches weicher als das Material der Gelenkteile ist aber härter als das Material des Federelements, um die Gelenkteile bei Montage und/oder Wartung vor Beschädigungen zu schützen. Beispielsweise kann das Werkzeug nach Art eines Schlitzschraubenziehers ausgebildet sein, dessen Breite kleiner oder im Wesentlichen gleich zu einer Breite einer Nut ist, in welcher das Federelement an jeweiligen Gelenkteilen angeordnet ist.

Alternativ oder zusätzlich kann das Gelenkset auch ein Werkzeug umfassen, insbesondere ein Spezialwerkzeug, welches zum Lösen des Federelements von den Gelenkteilen gedacht ist. So kann das Werkzeug beispielsweise einen Werkzeugkopf aufweisen, welche in eine Aussparung zwischen das Federelement und ein Halteelement einführbar ist, um das Federelement ohne Beschädigungen jeweiliger Teile vom Halteelement abziehen zu können.

In weiterer vorteilhafter Ausgestaltung des Gelenksets sind jeweilige Federelemente farblich kodiert und/oder jeweilige unterschiedliche Gelenkteile farblich kodiert. Beispielsweise kann ein erstes und ein zweites Gelenkteil, welche zueinander gehören, so dass beide Brillengelenke einer Brille gleich ausgebildet sind, gleich farblich konfiguriert sein. Ebenso kann mit der farblichen Codierung gekennzeichnet sein, welche Eigenschaften ein Federelement aufweist. Beispielsweise kann ein erstes, rotes gummielastisches Federelement eine stärkere Vorspannkraft aufweisen bei gleicher Dehnung als ein zweites, blaues gummielastisches Federelement. Vorzugsweise ist das Gelenkset immer dazu ausgebildet, zwei identische Brillengelenke zu bilden. Das heißt, vorzugsweise ist jedes zweite Gelenkteil und/oder jedes Federelement doppelt im Gelenkset vorhanden. Das erste Gelenkteil kann dagegen beispielsweise zusammen mit der Fassung ausgebildet sein, wobei natürlich für jeden Brillenbügel ein erstes Gelenkteil an der Fassung vorgesehen ist, und entsprechend zur Kostenersparnis nur eine Fassung im Gelenkset vorhanden sein.

Ein dritter Aspekt der Erfindung betrifft ein Brillengestell mit einer Fassung für wenigstens ein Brillenglas und zwei Brillenbügel. Weiterhin umfasst das Brillengestell gemäß dem dritten Erfindungsaspekt zwei Brillengelenke nach dem ersten Erfindungsaspekt, wobei diese aus einem Gelenkset gemäß dem zweiten Erfindungsaspekt gebildet sein können, wobei jeder Brillenbügel mittels jeweils einem der beiden Brillengelenke mit der Fassung beweglich verbunden ist. Das Brillengestell gemäß dem dritten Erfindungsaspekt kann also ein Brillengelenk gemäß dem ersten Erfindungsaspekt umfassen, wobei dieses konfigurierbar aus einem Gelenkset gemäß dem zweiten Erfindungsaspekt gebildet sein kann. Die sich aus der Verwendung des Brillengelenks gemäß dem ersten Erfindungsaspekt und dem Gelenkset gemäß dem zweiten Erfindungsaspekt ergebenden Merkmale und Vorteile sind den Beschreibungen des ersten bzw. des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind. Die beiden Brillengelenke können dabei spiegelsymmetrisch bezüglich einer vertikalen Mittelebene der Brille ausgebildet sein.

Das erste Gelenkteil kann dabei als Fassung des Brillengestells ausgebildet sein und/oder das zweite Gelenkteil als Brillenbügel des Brillengestells. Alternativ kann jedes zweite Gelenkteil mit jeweils einem Brillenbügel fest verbunden, beispielsweise verklebt, sein oder einstückig ausgebildet sein, beispielsweise als weitere Schicht eines Panzerholzbrillenbügels. Jedes erste Gelenkteil kann mit der Fassung an gegenüberliegenden Seiten bzw. Enden fest verbunden, beispielsweise verklebt, oder einstückig ausgebildet, sein, beispielsweise als weitere Schicht einer Panzerholzfassung. Vorzugsweise sind zwei Brillengläser in der Fassung des Brillengestells gehalten, insbesondere zur optischen Korrektur einer Sehschwäche eines Brillenträgers.

Ein vierter Aspekt der Erfindung betrifft ein Brillengestellset mit wenigstens zwei Fassungen für wenigstens jeweils ein Brillenglas und/oder wenigstens zwei Paare Brillenbügel, wobei mittels eines ausgewählten Paars von Brillenbügeln und mittels einer ausgewählten Fassung aus dem Brillengestellset ein Brillengestell montierbar ist, wobei im montierten Zustand jeweils jeder ausgewählte Brillenbügel mit der ausgewählten Fassung mittels eines Brillengelenks gemäß dem ersten Aspekt der Erfindung beweglich verbunden ist, wobei jede Fassung des Brillengestellsets ein entsprechendes erstes Gelenkteil und jeder Brillenbügel des Brillengestellsets ein entsprechendes zweites Gelenkteil aufweist. Das Brillengestellset kann dabei auch ein Gelenkset gemäß dem zweiten Aspekt der Erfindung umfassen, um jeweils ein Brillengelenk gemäß dem ersten Aspekt der Erfindung zu bilden.

Da das Brillengelenk auch von einem Heimanwender einfach zu montieren und zu demontieren ist, kann ein Brillengestellset bereitgestellt werden, mittels welchem eine Brille jeweils hinsichtlich der Anwenderwünsche frei konfigurierbar ist. Beispielsweise können mehrere Fassungen und/oder mehrere Paare Brillenbügel vorgesehen sein, so dass je nach Anwendungsfall eine Sportbrille, eine Lesebrille oder eine normale Brille im herkömmlichen Sinne gebildet werden kann. So kann der Besitzer des Brillengestellsets beispielsweise eine Fassung haben und zwei Paare von Brillenbügeln. Das erste Paar von Brillenbügeln ist beispielsweise besonders komfortabel und für den alltäglichen Gebrauch gedacht. Das zweite Paar von Brillenbügeln bietet beispielsweise einen besonders sicheren Halt, so dass die Brille bzw. die gleiche Fassung auch für einen bewegungsreichen Sport genutzt werden kann. Dabei ist es dann nicht notwendig, zwei separate Fassungen und insbesondere zwei separate Brillen zur Verfügung zu stellen. Damit kann beispielsweise auf die Anschaffung von zwei Paar teuren, geschliffenen Brillengläsern zur optischen Korrektur der Sehschwäche des Brillenträgers verzichtet werden. Auch bei dem Brillengestellset kann dabei in vorteilhafter Weise eine farbliche Codierung vorgesehen werden.

Jeweilige Fassungen und jeweilige Brillenbügel können übliche Abmaße von Brillen zur optischen Korrektur und/oder zum Sonnenschutz aufweisen. Das Federelement kann beispielsweise einen Innendurchmesser und/oder eine Länge von 2 mm bis 35 mm im ungespannten Zustand aufweisen, bevorzugt 3,5 mm bis 8 mm. Die Länge kann bei einem ringförmig geschlossenen Federelement entsprechend auch als Durchmesser zwischen zwei gegenüberliegenden Seiten im schlaffen Zustand definiert sein. Ein Durchmesser eines Querschnitts des Federelements kann beispielsweise 0,5 mm bis 5 mm betragen, bevorzugt 1,5 mm bis 3 mm. Die Federelemente können beispielsweise nach Art von O-Ringen ausgebildet sein.

Ein fünfter Aspekt der Erfindung betrifft die Verwendung eines insbesondere ringförmig geschlossenen und/oder gummielastisch ausgebildeten Federelements. Dieses Federelement kann in einem Brillengelenk gemäß dem ersten Aspekt der Erfindung und/oder in einem Gelenkset gemäß dem zweiten Aspekt der Erfindung und/oder in einem Brillengestell gemäß dem dritten Aspekt der Erfindung und/oder in einem Brillengestellset gemäß dem vierten Aspekt der Erfindung verwendet werden. Dadurch ergeben sich die Vorteile gemäß der vorher beschriebenen Aspekte der Erfindung.

Ein weiterer Aspekt betrifft eine Brille mit wenigstens einem Brillengelenk gemäß dem ersten Aspekt der Erfindung. Diese Brille kann ein entsprechendes Brillengestell umfassen und wenigstens ein Brillenglas zur Korrektur optischer Fehler und/oder zum Sonnenschutz aufweisen.

Dabei zeigt:
Fig. 1 in einer schematischen Perspektivansicht eine erste Ausführungsform eines Brillengelenks für ein Brillengestell in seiner Benutzungsstellung;
Fig. 2 zeigt in einer schematischen Perspektivansicht das Brillengelenk gemäß Fig. 1 in seiner Verstaustellung;
Fig. 3 zeigt in einer schematischen Oberansicht das Brillengelenk gemäß Fig. 1 in seiner Benutzungsstellung;
Fig. 4 zeigt in einer schematischen Oberansicht das Brillengelenk gemäß Fig. 1 in seiner Verstaustellung;
Fig. 5 zeigt in einer schematischen Perspektivansicht eine weitere Ausführungsform eines Brillengelenks in seiner Benutzungsstellung;
Fig. 6 zeigt in einer schematischen Perspektivansicht das Brillengelenk gemäß Fig. 5 in seiner Verstaustellung;
Fig. 7 zeigt in einer schematischen Vorderansicht das Brillengelenk gemäß Fig. 5;
Fig. 8 zeigt in einer schematischen Oberansicht das Brillengelenk gemäß Fig. 5 in seiner Benutzungsstellung;
Fig. 9 zeigt in einer schematischen Oberansicht das Brillengelenk gemäß Fig. 5 in seiner Verstaustellung;
Fig. 10 zeigt in einer schematischen Perspektivansicht eine weitere Ausführungsform eines Brillengelenks in seiner Benutzungsstellung;
Fig. 11 zeigt in einer schematischen Perspektivansicht das Brillengelenk gemäß Fig. 10 in seiner Verstaustellung;
Fig. 12 zeigt in einer schematischen Oberansicht das Brillengelenk gemäß Fig. 10 in seiner Benutzungsstellung;
Fig. 13 zeigt in einer schematischen Oberansicht das Brillengelenk gemäß Fig. 10 in seiner Verstaustellung;
Fig. 14 zeigt in einer schematischen Perspektivansicht eine weitere Ausführungsform eines Brillengelenks in seiner Benutzungsstellung;
Fig. 15 zeigt in einer schematischen Perspektivansicht das Brillengelenk gemäß Fig. 14 in seiner Verstaustellung;
Fig. 16 zeigt in einer schematischen Oberansicht das Brillengelenk gemäß Fig. 14 in seiner Benutzungsstellung;
Fig. 17 zeigt in einer schematischen Oberansicht das Brillengelenk gemäß Fig. 14 in seiner Verstaustellung;
Fig. 18 zeigt in einer schematischen Perspektivansicht das Brillengelenk gemäß Fig. 5 in einer überstauchten Gelenkstellung;
Fig. 19 zeigt in einer schematischen Perspektivansicht das Brillengelenk gemäß Fig. 5 in einer überstreckten Gelenkstellung; und
Fig. 20 zeigt in einer schematischen Perspektivansicht das Brillengelenk gemäß Fig. 5 in einer aus seiner Bewegungsebene nach oben heraus gelenkten Gelenkstellung.

Im Folgenden werden verschiedene Ausführungsformen eines Brillengelenks für ein Brillengestell diskutiert. Dabei werden Teile mit gleicher Funktion und/oder gleicher Gestaltung zum Teil mit identischen Bezugszeichen versehen und im Weiteren auf eine redundante Beschreibung für jede Ausführungsform verzichtet. Die Erfindung wird nach wie vor in den Ansprüchen definiert.

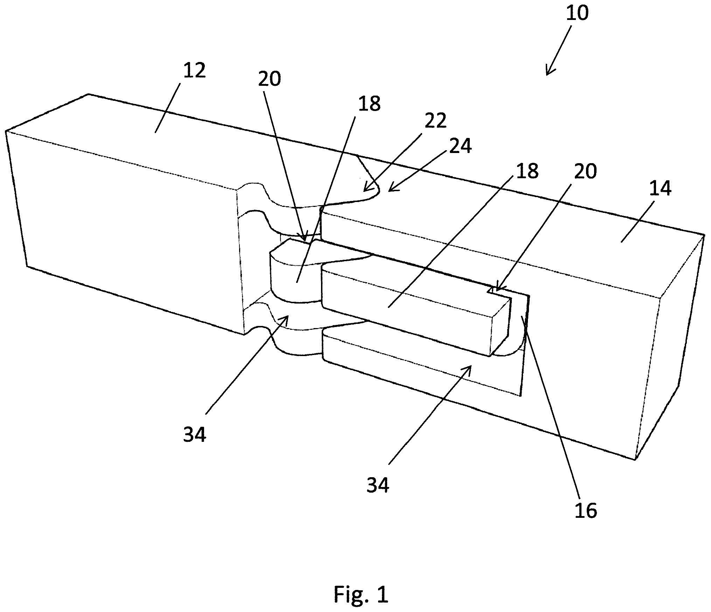

Fig. 1 zeigt in einer schematischen Perspektivansicht eine erste Ausführungsform eines Brillengelenks 10 für ein Brillengestell. Das Brillengelenk umfasst dabei ein erstes Gelenkteil 12, welches einer Fassung des Brillengestells zugeordnet ist. Weiterhin umfasst das Brillengelenk 10 ein zweites Gelenkteil 14, welches einem Brillenbügel des Brillengestells zugeordnet ist. Diese Zuordnung kann jedoch ohne Weiteres getauscht werden, ohne dass dabei die Funktionalität jeweiliger Brillengelenke eingeschränkt wird.

Beispielsweise kann das erste Gelenkteil 12 einstückig mit der Fassung des Brillengestells ausgebildet sein, wobei die Fassung zum Halten jeweiliger Gläser einer Brille dient und beim Tragen auf einer Nase des Trägers wenigstens bereichsweise aufliegt. Das zweite Gelenkteil 14 kann ebenso einstückig mit einem Brillenbügel ausgebildet sein und zum Halten des Brillengestells an einem Kopf eines Brillenträgers dienen. Beispielsweise können sowohl das erste Gelenkteil 12 als auch das zweite Gelenkteil 14 einheitlich aus einem einzigen Material bestehen, wie beispielsweise Holz, insbesondere Pressholz, Panzerholz, Stein, Horn, Kunststoff und/oder Metall. Entsprechend kann auch die Fassung und der jeweilige Brillenbügel aus dem gleichen Material gebildet sein.

Die beiden Gelenkteile 12, 14 sind dabei mittels eines an den beiden Gelenkteilen 12, 14 befestigten Federelements 16 beweglich miteinander verbunden. Das Federelement 16 ist vorliegend ringförmig geschlossen und aus einem gummielastischen Werkstoff ausgebildet. Beispielsweise eignen sich verschiedene Kautschukarten als Werkstoff für das Federelement 16. Das Federelement 16 ist dabei jeweils an einem Halteelement 18 an jedem der beiden Gelenkteile 12, 14 gehalten. Die beiden Halteelemente 18 weisen dabei an jeweils voneinander abgewandten Seiten eine Hinterschneidung 20 auf, welche ein Abrutschen des Federelements 16 von den Halteelementen 18 verhindert. Mittels des Federelements 16 sind die beiden Gelenkteile 12, 14 gegeneinander in einem Kontaktbereich gespannt. Dafür ist das Federelement 16 mit einer gewissen Vorspannung an den beiden Halteelementen 18 befestigt. Das heißt, das Federelement 16 ist gegenüber einem ungespannten, schlaffen Zustand gedehnt.

Außer mittels des Federelements 16 sind die beiden Gelenkteile 12, 14 nicht miteinander verbunden. Da das Federelement 16 elastisch ist, wird dadurch eine relative Bewegung der beiden Gelenkteile 12, 14 in prinzipiell allen Freiheitsgrade zueinander erlaubt. Insbesondere können die beiden Gelenkteile 12, 14 zwischen einer Benutzungsstellung, in welcher jeweilige Brillenbügel von der Fassung weggeklappt sind und die Brille auf dem Kopf eines Trägers aufgesetzt werden kann, und einer Verstaustellung, in welcher die Brillenbügel im Wesentlichen an der Fassung des Brillengestells anliegen bzw. zu jeweiligen Brillengläsern hin geklappt sind, verstellt werden.

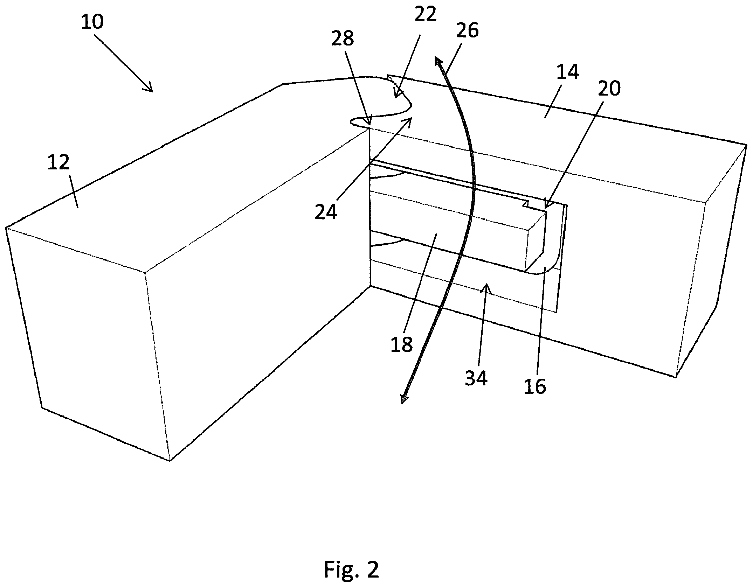

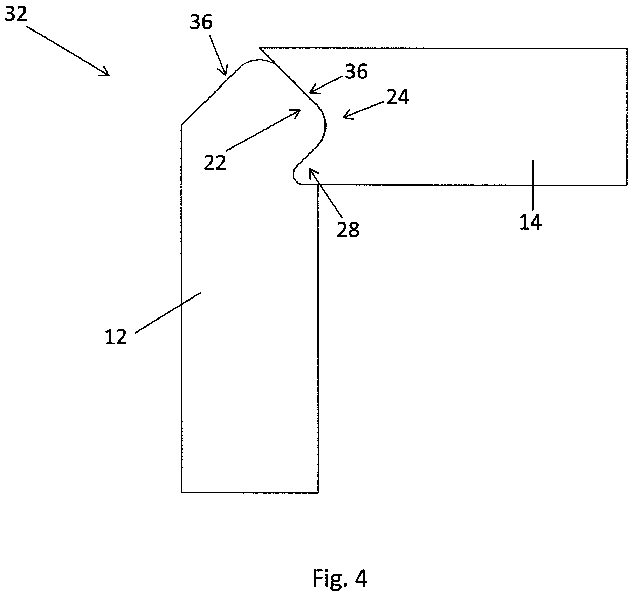

Die Verstaustellung des Brillengelenks 10 ist dabei beispielsweise in der schematischen Perspektivansicht von Fig. 2 zu erkennen, wobei die beiden Gelenkteile 12, 14 in einer Bewegungsebene relativ zueinander um 90° gegenüber dem in Fig. 1 dargestellten Benutzungszustand rotiert sind. Um die Bewegung der beiden Gelenkteile 12, 14 relativ zueinander wenigstens teilweise zu führen, weist das erste Gelenkteil 12 einen Abrollbereich 22 auf und das zweite Gelenkteil 14 weist einen korrespondierenden Aufnahmebereich 24 auf. Wie dies in den Fig. 1 und 2 und auch in den schematischen Oberansichten gemäß Fig. 3 und 4 zu erkennen ist, ist der Abrollbereich 22 dabei im Wesentlichen würfelförmig bzw. quaderförmig ausgebildet. Entsprechend ist der Aufnahmebereich 24 durch eine korrespondierende Aussparung mit rechteckigem Querschnitt gebildet. Jeweilige Ecken sind dabei gerundet ausgebildet, um so ein möglichst gleichmäßiges Abgleiten und/oder Abrollen der beiden Gelenkteile 12, 14 aneinander zu ermöglichen. Durch die jeweils entsprechende quaderförmige Ausbildung des Abrollbereichs und des Aufnahmebereichs werden insbesondere jeweils mindestens zwei Paare korrespondierender Auflageflächen 36, 22 bereitgestellt, die bei jeweiliger Auflage aufeinander die Verstau- bzw. Benutzungsposition bilden, wie auch nachfolgend beschrieben. Die jeweiligen Auflageflächenpaare sind dabei vorzugsweise bei der quaderförmigen Ausgestaltung über Eck ausgebildet und beispielsweise im Wesentlichen um 90° zueinander versetzt.

Der Aufnahmebereich 24 und der Abrollbereich 22 bilden dabei eine Art Führung für das Brillengelenk 10. Insbesondere stabilisieren diese beiden Bereiche 22, 24 die Gelenkteile 12, 14 hinsichtlich einer Kippbewegung nach oben oder nach unten, welche beispielsweise in Fig. 2 durch Pfeil 26 veranschaulicht wird. Dadurch wird sichergestellt, dass das Brillengelenk 10 komfortabel zwischen der Benutzungsstellung und der Verstaustellung verstellt werden kann, ohne dass das Brillengelenk ungewollterweise in eine andere Raumrichtung verdreht wird.

Die beiden Halteelemente 18 bilden dabei jeweils auch einen Teil des Abrollbereichs 22 bzw. des Aufnahmebereichs 24 und weisen jeweils zueinander zugewandte Kontaktflächen auf.

Da die beiden Gelenkteile 12, 14 lediglich über das Federelement 16 aneinandergehalten werden, ist beispielsweise eine Bewegung des zweiten Gelenkteils 14 relativ zu dem ersten Gelenkteil 12 entsprechend der durch Pfeil 26 veranschaulichten Bewegungsrichtung durchaus möglich. Der Brillenbügel kann also gegenüber der Fassung nach oben oder nach unten abgeknickt werden, wobei jeweilige Raumorientierungen gemäß einer Trageposition des Brillengestells auf dem Kopf eines Brillenträgers zu verstehen sind. Dadurch kann das Brillengelenk 10 vor Beschädigungen geschützt werden, falls ungewollter Weise Kräfte auf eines der beiden Gelenkteile 12, 14 in Hochrichtung wirken.

Aufgrund jeweiliger gerader Auflageflächen in Hochrichtung bei dem Abrollbereich 22 und dem Aufnahmebereich 24 und einer durch eine solche Bewegung erfolgenden weiteren Dehnung des Federelements 16 wird dabei eine Rückstellkraft erzeugt, welche jeweilige Gelenkteile 12, 14 des Brillengelenks 10 selbsttätig wieder in die Bewegungsebene zwischen der Benutzungsstellung und der Verstaustellung verstellt. Diese Bewegungsebene ist im Wesentlichen horizontal bezüglich einer Trageposition eines aufrecht stehenden Brillenträgers. Dadurch ist das Brillengelenk also besonders robust und einfach zu handhaben.

Weiterhin ist zu erkennen, dass der Abrollbereich 22 und der Aufnahmebereich 24 im Teilbereich 28 einen Anschlag 28 bilden, mittels welchem die Verstaustellung als Rastposition vorgegeben ist. Aufgrund der Vorspannung des Federelements 16 wird dabei das Brillengelenk 10 nach einem Verstellen aus der Benutzungsstellung um einen gewissen Winkelbereich bzw. in einen bestimmten Gelenkstellungsbereich selbsttätig in die Verstaustellung schnappen. Anschließend ist das Brillengelenk 10 in der Verstaustellung selbsttätig durch das Federelement 16 an dem Anschlag 28 gehalten. Es wird also eine metastabile Position zur Verfügung gestellt, welche von dem Brillengelenk bzw. jeweiligen Gelenkteilen 12, 14 nur durch äußere Krafteinwirkung mit einer gewissen Mindeststärke verlassen wird. Der Winkelbereich, ab welchem das Brillengelenk 10 selbsttätig in die Verstaustellung schnappt, ist dabei die im Wesentlichen durch die geraden Flächen der würfelförmigen Form des Aufnahmebereichs 24 und des Abrollbereichs 22 vorgegeben. Beispielsweise bei Passieren einer entsprechenden Ecke des Aufnahmebereichs 24 an einer korrespondierenden Ecke des Abrollbereichs 22 schnappt das Brillengelenk 10 von einer Stellung in die Andere.

Ebenso weist das Brillengelenk 10 auch eine metastabile Position in der Benutzungsstellung auf. Beispielsweise ist in der Oberansicht von Fig. 3 besonders gut zu erkennen, dass dabei der Aufnahmebereich 24 mit zwei geraden bzw. plane Flächen 36 an jeweiligen korrespondierenden geraden Flächen des Abrollbereichs 22 anliegt. In dieser Position kann das Federelement 16 beispielsweise seine geringste Dehnung aufweisen. Bei einem Verstellen des Brillengelenks 10 aus der Benutzungsstellung heraus wird deswegen automatisch eine erhöhte Zugkraft von dem Federelement 16 erzeugt, welche zunächst eine Rückstellkraft zurück in die Benutzungsstellung bewirkt. Die Benutzungsstellung ist dabei entsprechend durch die Geometrie des Abrollbereichs 22 und des Aufnahmebereichs 24 vorgegeben. Insbesondere durch die zueinander abgewinkelten geraden Flächen 36 wird dabei eine stabile Position der beiden Gelenkteile 12, 14 zueinander in der Benutzungsstellung bewirkt. Das Brillengelenk 10 schnappt entsprechend auch in einem gewissen Winkelbereich selbsttätig in die Benutzungsstellung, wobei die jeweiligen Flächen 36 als Rastflächen dienen und für eine stabile Lage der beiden Gelenkteile 12, 14 zueinander sorgt.

Weiterhin ist in Fig. 3 zu erkennen, dass der Abrollbereich 22 und der Aufnahmebereich 24 gegenüber einer Sicht aus Richtung des Pfeils 30 abgeschrägt sind. Der Pfeil 30 veranschaulicht dabei, aus welcher Richtung im Wesentlichen das Brillengelenk 10 von anderen Personen gesehen wird, solange ein damit versehenes Brillengestell von einem Brillenträger getragen wird. In anderen Worten erstreckt sich die Blickrichtung beispielsweise senkrecht auf die Längsrichtung eines Brillenbügels. Entsprechend ist ein eventuell vorhandener Spalt zwischen den beiden Gelenkteilen 12, 14 nach Art einer Abschrägung kaschiert. Dadurch können jeweilige Fertigungstoleranzen besonders groß sein, da kein unansehnlicher Spalt zu sehen ist. Im Übrigen werden die beiden Gelenkteile 12, 14 auch durch das Federelement gegeneinander gepresst, so dass automatisch der geringstmögliche Spalt eingestellt wird.

Zudem wird durch diese Anordnung erreicht dass eine V-förmige Aufnahme gebildet wird, mittels derer die Gelenkteile stabil gehalten werden können.

In der Oberansicht des Brillengelenks 10 gemäß Fig. 4 ist weiterhin zu erkennen, dass ein einem Innenwinkel des Brillengelenks 10 in der Verstaustellung abgewandter Bereich 32 keine Überlappung zwischen dem ersten und dem zweiten Gelenkteil 12, 14 aufweist. Dadurch ist es möglich, dass das Brillengelenk 10 noch weiter zusammengeklappt wird, ohne dass es zu einer strukturellen Belastung aneinander angrenzender Bereiche der beiden Gelenkteile 12, 14 kommt. Insbesondere wird dabei kein Kontaktbereich auf Zug belastet, stattdessen rollen die beiden Gelenkteile 12, 14 bei einem solchen über einen vorgesehenen Bereich gehendes Zusammenpressen des Brillengelenks 10 an dem Anschlag 28 aneinander ab. In dem Bereich 32 können dabei die beiden Gelenkteile 12, 14 voneinander abheben, um das Brillengelenk 10 so strukturell zu entlasten. So ist das Brillengelenk 10 ebenfalls vor Beschädigungen geschützt. Üblicherweise kann ein Federelement 16 dabei ohne Weiteres dazu ausgelegt werden, dabei zusätzlich gedehnt zu werden, ohne dabei beschädigt zu werden, und ansonsten dennoch genug Vorspannkraft zur Verfügung zu stellen.

Das Federelement 16 ist an den beiden Halteelementen 18 bzw. an den beiden Gelenkteilen 12, 14 lösbar befestigt. Dadurch ist es insbesondere möglich, das Federelement 16 gegen ein anderes Federelement mit einer anderen Federkennlinie auszutauschen. Beispielsweise können Federelemente 16 aus unterschiedlichen Gummimischungen vorgesehen werden, wodurch diese unterschiedlichen Federelemente unterschiedliche Kräfte bei gleicher Dehnung erzeugen. Dadurch kann je nach verwendetem Federelement zum einen eine unterschiedliche Kraft vorgegeben werden, mit welcher das Brillengelenk 10 jeweils in die Benutzungsstellung und/oder die Verstaustellung schnappt und zudem entsprechend auch welche Kraft benötigt wird, um das Brillengelenk 10 zwischen diesen Positionen zu verstellen. Ebenso kann dadurch auch vorgesehen werden, dass eine gewisse Kraft notwendig ist, um das Brillengelenk 10 in der Benutzungsstellung zu halten. Damit kann bewirkt werden, dass jeweilige Brillenbügel an den Kopf eines Trägers gedrückt werden, um ein entsprechendes Brillengestell so zusätzlich an dem Kopf des Trägers zu halten.

Das Brillengelenk 10 kann einfach montiert und zerlegt werden. Insbesondere kann es möglich sein, das Brillengelenk 10 ohne zusätzliches Werkzeug und/oder Ausbildung zu montieren. Damit ist es auch für einen Heimanwender möglich, einzelne Teile des Brillengelenks 10 auszutauschen, wie beispielsweise das Federelement 16. Das Brillengelenk 10 justiert sich dabei durch den Aufnahmebereich 24 und den Abnahmebereich 22 sowie das Federelement 16 selber, so dass keine weiteren Feinjustierungen und Anpassungen des Brillengelenks 10 an dessen Träger durch permanentes Deformieren jeweiliger Teile des Brillengelenks 10 notwendig sind. Dadurch kann das Brillengelenk 10 auch für einen Heimanwender konfigurierbar sein.

Wie insbesondere in den Fig. 1 und 2 zu erkennen ist, weisen die beiden Gelenkteile 12, 14 jeweils eine Nut 34 auf, in welcher das Federelement 16 angeordnet ist. Damit ist das Federelement 16 gegenüber jeweiligen Außenflächen der beiden Gelenkteile 12, 14 versenkt angeordnet, wodurch zum einen das Federelement 16 vor Beschädigungen geschützt werden kann und zum anderen auch beispielsweise ein Einklemmen von Haaren an dem Federelement 16 besonders gut vermieden werden kann. Die Nuten 34 können dabei auch als Aussparungen in den beiden Gelenkteilen 12, 14 verstanden werden, in deren Mittenbereich jeweils die Halteelemente 18 angeordnet sind. Die Nuten 34 und/oder die Halteelemente können durch Fräsen jeweiliger Gelenkteilrohlinge, insbesondere Panzerholzrohlingen, gefertigt werden.

Die Nut 34 an dem ersten Gelenkteil 12 ist dabei so gestaltet, dass diese bei dem Brillengelenk 10 in Verstaustellung nicht mehr von außen zugänglich ist. Dies ist insbesondere in Fig. 2 zu erkennen. Dadurch wird das Federelement 16 von einem Herausrutschen aus der Nut 34 bzw. einem Abgleiten von dem Halteelement 18 an dem ersten Gelenkteil 12 in der Verstaustellung geschützt. Dies ist insbesondere sinnvoll, wenn das Federelement 16, wie es vorliegend der Fall ist, in der Verstaustellung weniger gedehnt ist als in der Benutzungsstellung. Falls die Dehnungsverhältnisse umgekehrt sind, kann auch eine umgekehrte Konstruktion bzw. Blockierung der Nut 34 an dem ersten und/oder zweiten Gelenkteil 14 in der Benutzungsstellung vorgesehen werden: In dem Fall kann beispielsweise die Nut 34 des zweiten Gelenkteils 14 in der Benutzungsstellung abgedeckt sein.

Wie beispielsweise in Fig. 1 zu erkennen ist, erstreckt sich das Halteelement 18 bei dem zweiten Gelenkteil 14 des Brillengelenks 10 weiter von jeweiligen Kontaktflächen der beiden Gelenkteile 12, 14 weg als das Halteelement 18 des ersten Gelenkteils 12. Dadurch kann berücksichtigt werden, dass an einem Brillenbügel entsprechend mehr Bauraum vorhanden ist als an einer Fassung, da dieser auch noch jeweilige Brillengläser aufnehmen muss und zudem meist im Anschluss an das erste Gelenkteil 12 eine Krümmung von ca. 90° aufweist. Durch diese weite Erstreckung des Federelements 16 beim zweiten Gelenkteil 14 kann insgesamt ein längeres Federelement 16 verwendet werden. Durch ein längeres Federelement 16 wird dieses bei einer Bewegung des Brillengelenks 10 bezüglich seiner Gesamtlänge relativ weniger gestreckt bzw. gedehnt als ein entsprechend kürzeres Federelement. Dadurch wird das Federelement 16 insgesamt weniger belastet. Insbesondere kommt es so erst nach einer hohen Anzahl von Gelenkbewegungen zu einer Ermüdung eines gummielastischen Werkstoffs, aus welchem das Federelement 16 gebildet ist.

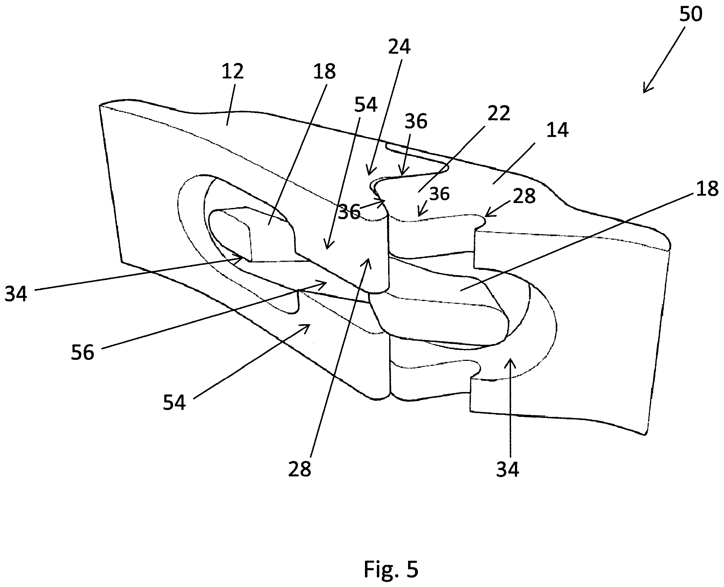

Fig. 5 zeigt in einer schematischen Perspektivansicht eine zweite Ausführung des Brillengelenks, wobei dieses mit dem Bezugszeichen 50 versehen ist. Bei dem Brillengelenk 50 ist der Abrollbereich 22 an dem zweiten Gelenkteil 14 angeordnet und der Aufnahmebereich 24 an dem ersten Gelenkteil 12. Die Anordnung ist hier also gegenüber dem Brillengelenk 10 umgekehrt. Alternativ kann das Gelenkteil 12 hier auch dem Brillenbügel zugeordnet sein und das Gelenkteil 14 der Fassung. In diesem Fall würde bei Fig. 5 beispielsweise ein linkes Brillengelenk 50 gezeigt und bei Fig. 1 ein rechtes Brillengelenk 10. Jeweilige linke und rechte Brillengelenke sind vorzugsweise symmetrisch bezüglich einer Spiegelachse durch die Mitte einer Fassung ausgebildet.

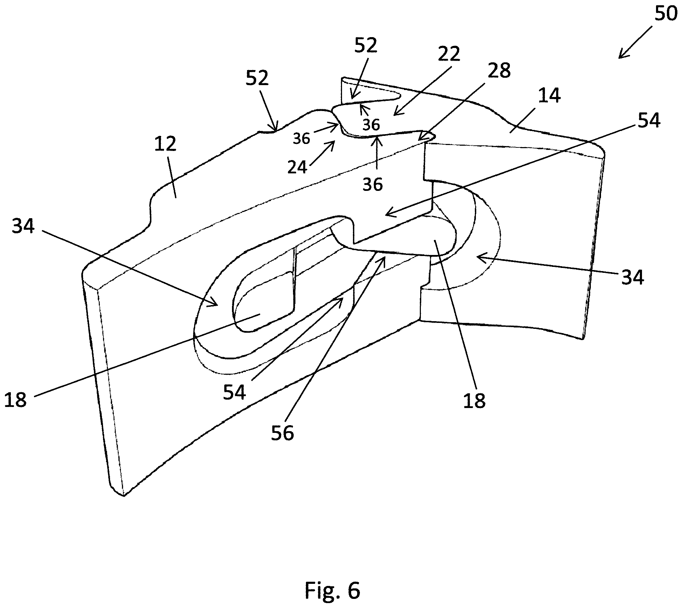

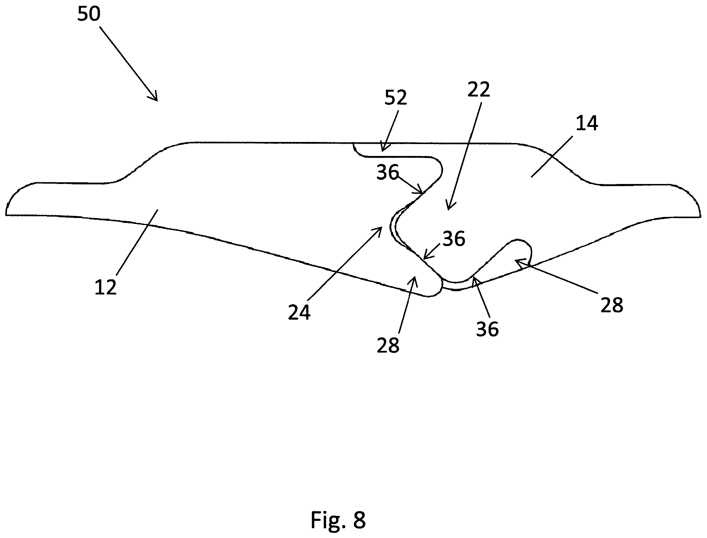

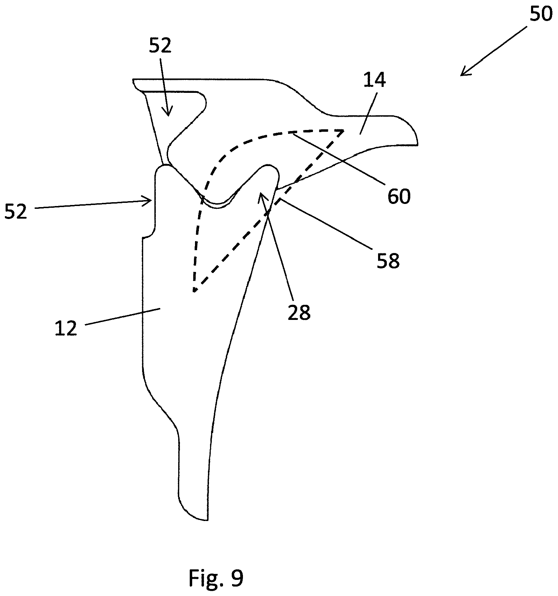

Analog zu den Figuren des Brillengelenks 10 ist das Brillengelenk 50 in Fig. 5 in seiner Benutzungsstellung gezeigt, Fig. 6 zeigt in einer schematischen Perspektivansicht das Brillengelenk 50 in seiner Verstaustellung, Fig. 8 zeigt das Brillengelenk 50 in einer schematischen Oberansicht in der Benutzungsstellung und Fig. 9 zeigt das Brillengelenk 50 in einer schematischen Oberansicht in seiner Verstaustellung. Die Oberansicht kann einer Draufsicht von oben in Körperhochrichtung bei getragener Brille und aufrechter Haltung entsprechen. Aufgrund der symmetrischen Bauweise entspricht die Darstellung in der Oberansicht auch einer Unteransicht.

Wie insbesondere in Fig. 5 und Fig. 6 zu erkennen ist, weist das Brillengelenk 50 nicht nur den Anschlag 28 auf, sondern auch den weiteren Anschlag 52. Mittels des Anschlags 52 wird die Benutzungsstellung besonders präzise vorgegeben und das Brillengelenk 50 zusätzlich in dieser Position stabilisiert.

Weiterhin ist zu erkennen, dass sich die beiden Gelenkteile 12, 14 an einer den jeweiligen Kontaktflächen abgewandten Seite verjüngen, insbesondere quer zur Haupterstreckungsrichtung der beiden Gelenkteile 12, 14 bzw. im Wesentlichen orthogonal zu einer vertikalen Ebene bei getragener Ebene in aufrechter Haltung. Diese Verjüngung sorgt für ein besonders filigranes Erscheinungsbild des Brillengestells. Die Verjüngung kann dabei insbesondere bezüglich einer strukturellen Belastung der jeweiligen Gelenkteile 12, 14 ausgelegt sein, welche im Bereich der jeweiligen Kontaktflächen und damit im Bereich des Abrollbereichs 22 und des Aufnahmebereichs 24 besonders hoch ist und an jeweiligen abgewandten Seiten dagegen relativ gesehen kleiner wird. So kann das Brillengelenk 50 ein besonders geringes Gewicht aufweisen.

Zudem sind bei dem Brillengelenk 50 gegenüber der ersten Ausführungsform (Brillengelenk 10) die jeweiligen Halteelemente 18 und die Nuten 34 anders gestaltet.

Die Halteelemente 18 des Brillengelenks 50 weisen keine Hinterschneidungen 20 auf. Stattdessen sind die Halteelemente 18 gegenüber einer Ebene, welche durch das Federelement 16 (welches in den Fig. 5 bis 9 schwer zu erkennen ist und deswegen nicht mit einem Bezugszeichen versehen ist, jedoch in den Nuten 34 angeordnet ist) in der Benutzungsstellung gebildet ist, leicht geneigt. Diese Neigung der Halteelemente 18 bewirkt ähnlich den Hinterschneidungen 20 zunächst ein Rückhalten des Federelements 16 in den jeweiligen Nuten 34. Falls das Brillengelenk 50 jedoch über die Verstaustellung hinaus zusammengepresst wird, das heißt also, wenn die beiden Gelenkteile 12, 14 über die in Fig. 6 und Fig. 9 gezeigte Stellung hinaus aufeinander zugeklappt werden, kann das Federelement 16 von den Halteelementen 18 von selbst abrutschen. Dadurch lösen sich dann die beiden Gelenkteile 12, 14 voneinander, wodurch eine Beschädigung des Brillengelenks 50 bei einem zu weiten Zusammenklappen vermieden werden kann. Anschließend kann das Federelement 16 zur Demontage des Brillengelenks 50 einfach wieder über die Halteelemente 18 gezogen werden. Damit ist das Brillengelenk 50 also besonders robust. Insgesamt ist die Montage und Demontage des Federelements 16 aufgrund der schrägen Halteelemente 18 zudem gegenüber dem Brillengelenk 10 mit den Halteelementen 18 mit Hinterschneidung 20 vereinfacht.

Weiterhin ist die Nut 34 an dem ersten Gelenkteil 12 so ausgebildet, dass sie auf einer dem zweiten Gelenkteil 14 zugewandten Seite eine Hinterschneidung 54 aufweist. Das Federelement 16 muss deswegen zur Montage und Demontage durch eine mittlere Lücke 56 gefädelt werden, welche auch als Öffnung 56 bezeichnet werden kann. Diese mittlere Lücke 56 ist dabei im montierten Zustand der beiden Gelenkteile 12, 14 durch das Halteelement 18 des zweiten Gelenkteils 14 wenigstens in den normal vorgesehenen Gelenkstellungen verschlossen. Die normal vorgesehenen Gelenkstellungen entsprechen dabei üblicherweise der Verstaustellung, der Benutzungsstellung, sowie allen Stellungen dazwischen in der Bewegungsebene. Das Halteelement 18 des zweiten Gelenkteils 14 beim Brillengelenk 50 gleitet also durch die mittlere Öffnung 56, wodurch die Gelenkteile 12, 14 zusätzlich bei einer kompakten Bauweise aneinander geführt sind. Entsprechend muss das Federelement 16 zunächst an dem ersten Gelenkteil 12 zur Montage des Brillengelenks 50 angeordnet werden und erst danach an dem Halteelement 18 des zweiten Gelenkteils 14. Dadurch ist das Federelement 16 vor einem ungewollten Lösen und auch vor einem Verlust gesichert.

Gleichzeitig dient die Hinterschneidung 54 dazu, für eine weitere Vorspannung des Federelements 16 auch in der Verstaustellung des Brillengelenks 50 zu sorgen. Die Hinterschneidung 54 sorgt also dafür, dass das Federelement 16 im Wesentlichen der Kontur der beiden Nuten 34 in der Verstaustellung des Brillengelenks 50 folgen muss. Andernfalls würde das Federelement beispielsweise wenigstens teilweise außerhalb der Nuten 34 in der Verstaustellung des Brillengelenks 50 angeordnet sein. Ein solcher Verlauf des Federelements 16 ist beispielsweise in der Fig. 9 durch die gestrichelte Linie 58 veranschaulicht. Durch die Hinterschneidung 54 folgt jedoch das Federelements 16 dem durch die gestrichelte Linie 60 veranschaulichten Verlauf. So kann weiterhin eine ausreichende Vorspannung des Federelements 16 auch in der Verstaustellung sichergestellt werden, um die beiden Gelenkteile 12, 14 aneinanderzuhalten, ohne das eine sehr starke Vorspannung in der Benutzungsstellung notwendig ist. Dadurch wird das Brillengelenk 50 entlastet. Zudem ist das Federelement 16 so weiterhin vor Beschädigungen geschützt in den Nuten 34 in der Verstaustellung des Brillengelenks 50 angeordnet.

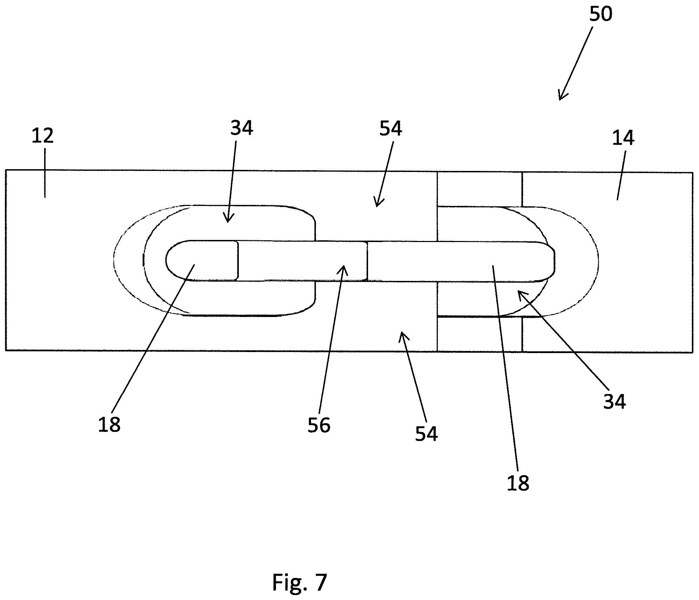

An der Hinterschneidung 54 stützt sich das Federelement 16 des Brillengelenks 50 also nur in einem bestimmten Gelenkstellungsbereich ab, welcher insbesondere benachbart zu der Verstaustellung ist. Zur weiteren Veranschaulichung der Nuten 34, der Halteelemente 18 und der Hinterschneidung 54 des Brillengelenks 50 ist dieses zudem in einer perspektivischen seitlichen Innenansicht in Fig. 7 dargestellt.

Bei dem Brillengelenk 50 ist ferner insbesondere beispielsweise in Fig. 8 besonders gut zu erkennen, dass an der Ecke zwischen den planen Auflageflächen 36 des Abrollbereichs 22 und des Aufnahmebereichs 24 ein gewisser Spalt vorgesehen ist. Dieser Spalt ermöglicht ein besonders gleichmäßiges Verstellen zwischen der Verstaustellung und der Benutzungsstellung, das heißt, die jeweiligen Gelenkteile 12, 14 können besonders gleichmäßig relativ zueinander bewegt werden. Bei einer ungerundeten Ecke und/oder einer spaltfreien Passung könnte es dagegen leicht zu einem Hängenbleiben und/oder Ruckeln bei einer Verstellung des Brillengelenks 50 kommen.

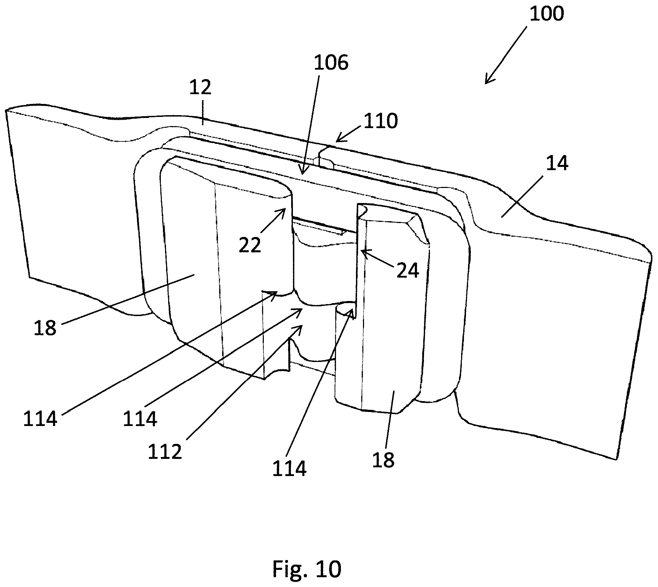

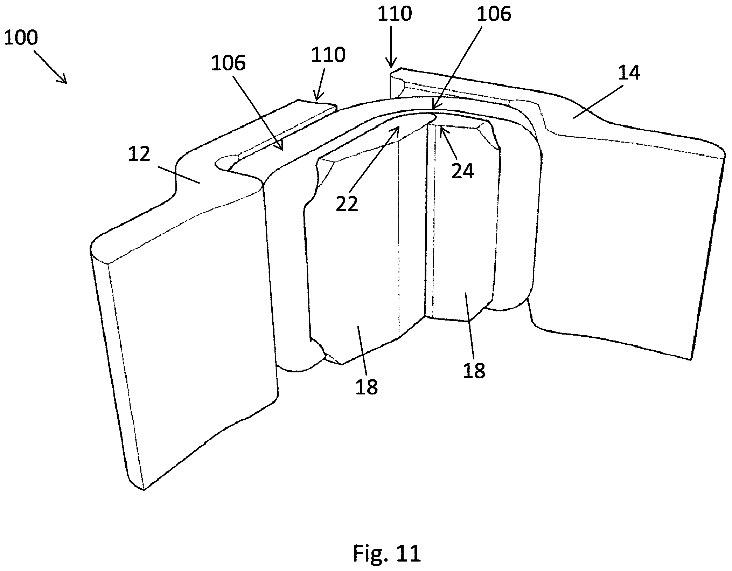

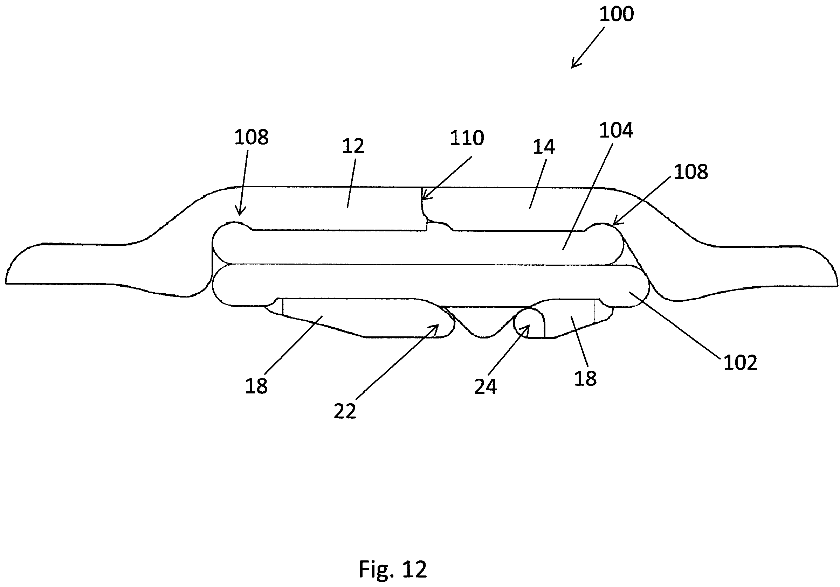

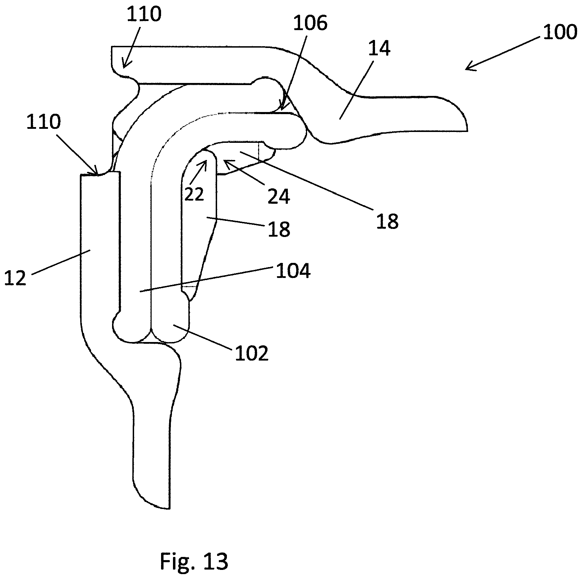

Die in der schematischen Perspektivansicht gemäß Fig. 10 gezeigte dritte Ausführungsform des Brillengelenks, welche hier mit dem Bezugszeichen 100 versehen ist, unterscheidet sich bezüglich der ersten beiden Ausführungsformen insbesondere dadurch, dass die beiden Gelenkteile 12, 14 nun mittels eines ersten Federelements 102 und eines zweiten Federelements 104 miteinander verbunden sind. Diese sind besonders gut in der schematischen Oberansicht des Brillengelenks 100 gemäß Fig. 12 zu erkennen, welche das Brillengelenk 100 ebenfalls in seiner Benutzungsstellung zeigt. Die dritte Ausführungsform des Brillengelenks 100 ist zudem in der schematischen Perspektivansicht gemäß Fig. 11 in seiner Verstaustellung gezeigt. Ebenso zeigt die schematische Oberansicht der Fig. 13 das Brillengelenk 100 in seiner Verstaustellung.

Die beiden Gelenkteile 12, 14 weisen dabei erneut jeweils ein Halteelement 18 auf, welche jeweils eine Hinterschneidung aufweisen, an welcher sich das innere Federelement 102 an einer in der Trageposition des Brillengestells an den Kopf des Brillenträgers zugewandten Seite abstützt. Auf einer dieser Seite abgewandten Seite stützt sich entsprechend das zweite Federelement 104 ab, so dass beide Federelemente 102, 104 sicher in einer um die beiden Halteelemente 18 umlaufenden Aussparung 106 aufgenommen sind. Die beiden Gelenkteile 102, 104 weisen dabei zusätzlich eine wulstförmige Vertiefung 108 an der Aussparung 106 auf, mittels welcher das Federelement 104 zusätzlich in seiner Lage in der Aussparung 106 fixiert wird. Diese wulstförmige Vertiefung 108 kann dabei umlaufend gemäß einer Ringform des Federelements 104 ausgebildet sein oder auch nur an jeweiligen dem Abrollbereich 22 und dem Aufnahmebereich 24 abgewandten Seiten der Aussparung 106.

Zudem ist bei dem Brillengelenk 100 der Aufnahmebereich 24 und der Abrollbereich 22 erkennbar anders gestaltet. Beim Brillengelenk 100 bilden der Abrollbereich 22 und der Aufnahmebereich 24 keine ebenen Rastflächen aus, welche entsprechend eine Benutzungsstellung und/oder Verstaustellung des Brillengelenks 100 vorgeben. Stattdessen ist die Benutzungsstellung des Brillengelenks 100, wie diese in den Fig. 10 und 12 gezeigt ist, lediglich durch den Anschlag 110 vorgegeben. Die Verstaustellung des Brillengelenks 100, die in der schematischen Perspektivansicht gemäß Fig. 11 und in der Oberansicht gemäß Fig. 13 gezeigt ist, wird durch die wechselseitigen Vertiefungen und Erhöhungen in einem Mittenbereich auf einer Innenseite des Brillengelenks 100 vorgegeben, welche hier mit dem Bezugszeichen 112 kenntlich gemacht sind. Diese wechselseitigen Erhöhungen und Vertiefungen im Bereich 112 bilden dabei gleichzeitig Auflageflächen 114, welche im Wesentlichen parallel zu der Bewegungsebene des Brillengelenks 100 zwischen der Verstaustellung und der Benutzungsstellung angeordnet sind. Durch diese Auflageflächen 114 wird das Brillengelenk während einer Verstellung zwischen diesen Stellungen zusätzlich gegen ein Verkippen eines der beiden Gelenkteile 12, 14 nach oben oder unten gegenüber dem anderen der beiden Gelenkteile 12, 14 abgestützt. Damit wird eine zusätzliche Führung bereitgestellt, welche für ein gleichmäßiges Verstellen zwischen den beiden Stellungen sorgt und ungewolltes Kippen verhindert.

Mittels der zwei vorgesehenen Federelemente 102, 104 kann das Brillengelenk 100 besonders gut bezüglich jeweiliger Verstellkräfte und selbsttätiger Rückstellkräfte angepasst werden. Beispielsweise kann das Federelement 104 im Wesentlichen eine Schnappwirkung in die Benutzungsstellung definieren und das Federelement 102 im Wesentlichen die Schnappwirkung in die Verstaustellung. Entsprechend können jeweilige Kräfte zum Bewegen aus diesen jeweiligen Stellungen wenigstens zum Teil unabhängig voneinander vorgegeben werden. Im Übrigen können auch so die Winkelbereiche verändert bzw. vorgegeben werden, bei welchen das Brillengelenk 100 in die eine oder in andere Stellung schnappt.

Für eine solche Veränderung müssen beim Brillengelenk 100 nicht notwendigerweise die Geometrien des Abrollbereichs 22 und des Aufnahmebereichs 24 geändert werden sondern es könne auch lediglich die Federelemente 102, 104 ausgetauscht werden. Dies ist insbesondere auch möglich, weil auch keine korrespondierenden Auflageflächen vorgegeben sind, welche bereits im Wesentlichen vorgeben, ab welchem Winkelbereich das Brillengelenk 100 in die eine oder die andere Stellung schnappt, wie das beispielsweise bei dem Brillengelenk 10 und Brillengelenk 50 durch die würfelförmige Form des Abrollbereichs 22 und des Aufnahmebereichs 24 vorgegeben ist. Bei dem Brillengelenk 100 sind dagegen der Abrollbereich 22 und der Aufnahmebereich 24 im Wesentlichen gerundet ausgebildet.

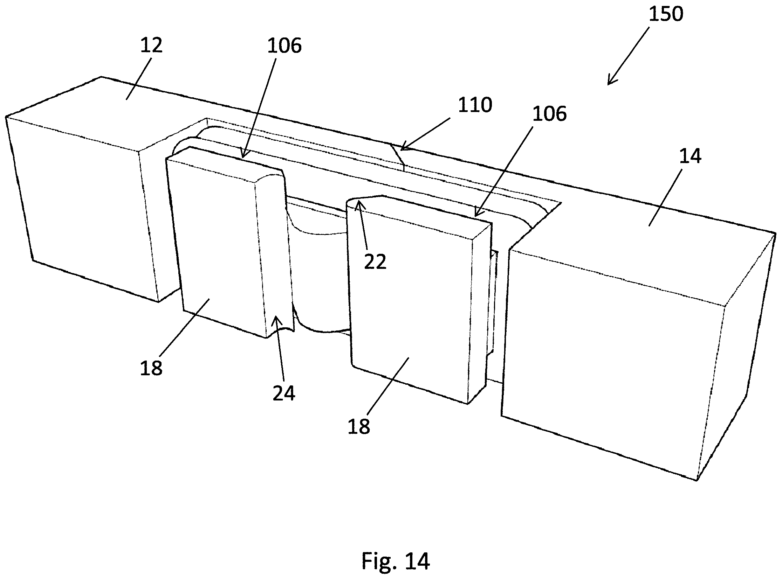

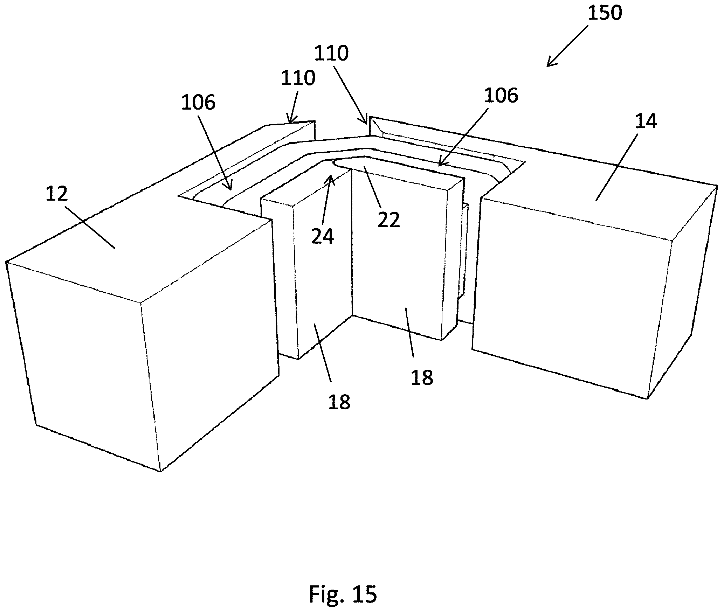

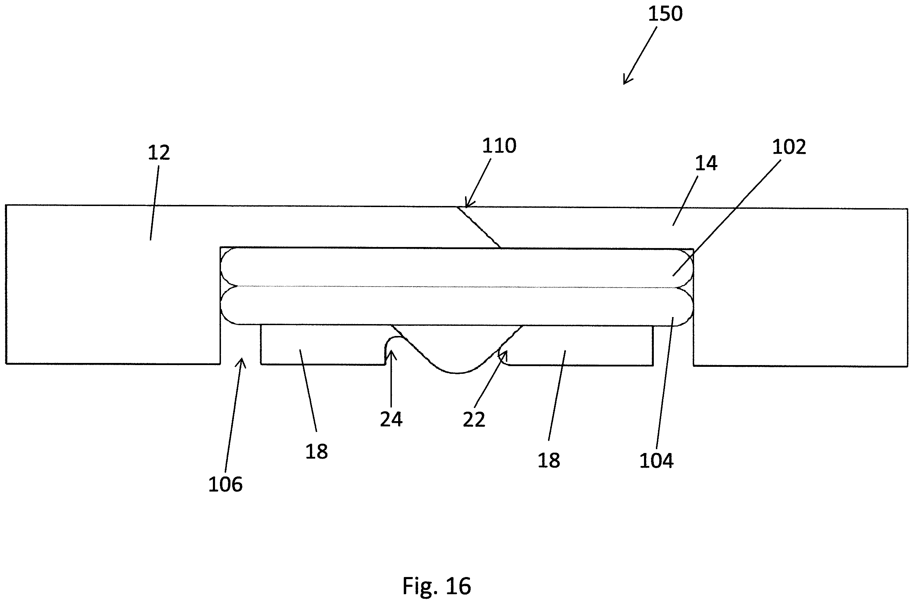

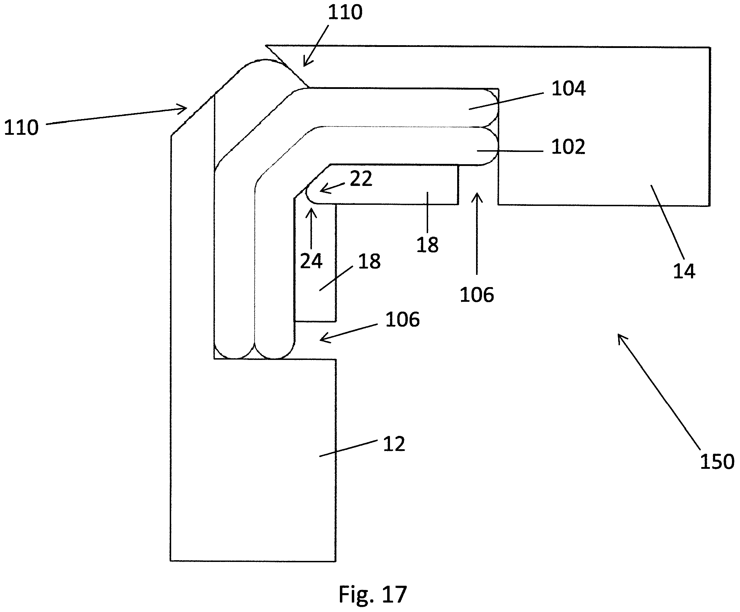

In der schematischen Perspektivansicht gemäß Fig. 14 ist eine vierte Ausführungsform des Brillengelenks gezeigt, welche hier mit dem Bezugszeichen 150 versehen ist. Das Brillengelenk 150 ist dabei ähnlich zu dem Brillengelenk 100 ausgebildet, insbesondere sind auch hier zwei Federelemente 102, 104 vorgesehen. Diese beiden Federelemente 102, 104 sind dabei insbesondere gut in den schematischen Oberansichten des Brillengelenks 150 gemäß Fig. 16 und Fig. 17 zu erkennen. Die Benutzungsstellung des Brillengelenks 150 ist dabei in Fig. 14 und der Fig. 16 gezeigt, während die Verstaustellung des Brillengelenks 150 in der schematischen Perspektivansicht gemäß Fig. 15 und in der Fig. 17 gezeigt ist.

Das Brillengelenk 150 kann auch als vereinfachte Version des Brillengelenks 100 verstanden werden. Hier wurde auf eine Verjüngung an jeweiligen abgewandten Seiten von jeweiligen Kontaktflächen zwischen den beiden Gelenkteilen 12, 14 verzichtet. Ebenso gibt es in dem Aufnahmebereich 24 bzw. in dem Abrollbereich 22 keine wechselseitigen Erhebungen. Außerdem ist eine wulstartige Vertiefung zum Halten des Federelements 104 in der Aussparung 106 vorgesehen. So sind die beiden Gelenkteile 12, 14 des Brillengelenks 150 besonders kostengünstig zu fertigen.

Um die jeweiligen Brillengelenke 10, 50, 100, 150 besonders verschleißfest zu machen, können diese im Bereich jeweiliger Kontaktflächen, also insbesondere im Abrollbereich 22 und im Aufnahmebereich 24, mit einer zusätzlichen Gleitschicht versehen werden. Diese Gleitschicht kann beispielsweise durch ein Epoxidharz gebildet werden, wodurch ein Reibverschleiß der beiden Gelenkteile 12, 14 besonders minimiert werden kann. Alternativ oder zusätzlich kann auch ein Gleitmittel zwischen den beiden Gelenkteilen 12, 14 vorgesehen werden, beispielsweise Teflonpulver. Alternativ oder zusätzlich können die beiden Gelenkteile 12, 14 auch mit einer fest aufgebrachten Teflonschicht versehen werden.

Dadurch, dass die Brillengelenke 10, 50, 150 und 200 besonders einfach montiert und zerlegt werden können, können diese auch Teil eines Gelenksets und/oder Brillengestellsets sein. So können mehrere unterschiedliche Gelenkteile 12, 14 und/oder mehrere unterschiedliche Federelemente 16, 102, 104 bereitgestellt werden. Dann kann ein Heimanwender ein entsprechendes Brillengelenk gemäß seinen persönlichen Anforderungen zusammenstellen und montieren. Ebenso können beispielsweise Fassung und/oder Brillenbügel gemäß unterschiedlicher Anforderungen ausgetauscht werden. Gleichzeitig ermöglichen die Brillengelenke 10, 50, 100, 150 so auch einen einfachen Austausch und/oder Reparatur einzelner Teile.

Dadurch, dass die beiden Gelenkteile 12, 14 nur durch jeweilige Federelemente 16 bzw. 102 und 104 gegeneinander gehalten werden, ergibt sich keine steife Drehachse für ein entsprechendes Brillengelenk. Stattdessen können sich die beiden Gelenkteile 12, 14 relativ zueinander sowohl durch eine rotatorische als auch durch eine translatorische Bewegung verstellen. Insbesondere kann ein Verstellen zwischen der Verstaustellung und der Benutzungsstellung durch ein kombiniertes Abgleiten und Abrollen erfolgen.

Jeweilige Fertigungstoleranzen können dabei besonders groß sein, insbesondere auch im Bereich des Abrollbereichs 22 und des Aufnahmebereichs 24. Durch das Zusammendrücken der beiden Gelenkteile 12, 14 mittels des Federelements 16 bzw. 102 und 104 erfolgt automatisch ein Toleranzausgleich und die beiden Gelenkteile 12, 14 sind in jeder Stellung spaltminimal aneinandergehalten. Das Brillengelenk 10, 50, 100, 150 hat also einen integralen Toleranzausgleich, wodurch es besonders kostengünstig gefertigt werden kann. Jeweilige Fertigunsgtoleranzen können groß sein. Insbesondere kann es durch Fertigungsabweichungen nicht schnell zu einem Hacken und/oder Blockieren der Brillengelenk 10, 50, 100, 150 kommen, wie dies bei herkömmlichen Gelenken schnell der Fall ist. Zudem löst sich ein entsprechendes Gelenk auch bei wiederholter Verstellung nicht und/oder muss durch einen Optiker nachjustiert werden, wie dies beispielsweise bei einem verschraubten Brillenscharnier schnell der Fall ist. Insbesondere werden die Brillengelenke 10, 50, 100, 150 nicht durch Überlastungen und/oder Überdehnungen und/oder Überstauchungen dauerhaft deformiert und erfordern nach einer solchen Belastung nicht zwangsläufig eine Wartung.

Die Brillengelenke 10, 50, 100, 150 sind bezüglich ihrer Hochrichtung symmetrisch ausgebildet, was fertigungstechnisch vorteilhaft ist.

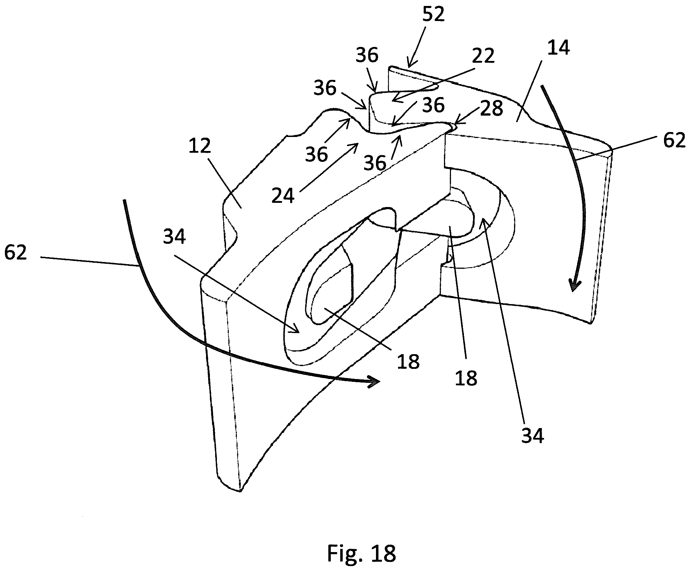

Die Fig. 18, Fig. 19 und die Fig. 20 zeigen jeweils in einer schematischen Perspektivansicht das Brillengelenk 50 gemäß der Fig. 5. Hierbei sind verschiedene Stellungen gezeigt, welche das Brillengelenk 50 üblicherweise nicht während einer Verstellung zwischen seiner Verstaustellung und seiner Benutzungsstellung einnehmen sollte und welche bei herkömmlichen Brillengelenken schnell zu einer Beschädigung und/oder dauerhaften Deformierung führen. Das Brillengelenk 50 kann solche Gelenkstellungen und die damit einhergehenden Belastungen jedoch aufnehmen, ohne dabei beschädigt zu werden. Solche Gelenkstellungen können auch ohne Beschädigungen von den Brillengelenken 10, 100 und 150 eingenommen werden.

Fig. 18 zeigt das Brillengelenk 50 in einer überstauchten Stellung. Die beiden Gelenkteile 12, 14 sind hier über die Verstaustellung hinaus aufeinander in Richtung der Pfeile 62 zu bewegt worden, wobei diese Bewegung immer noch in der Bewegungsebene zwischen der Verstaustellung und der Benutzungsstellung erfolgt ist. Eine solche Überstauchung kann beispielsweise durch ein Pressen auf eine an einem Hemd eingehakte Brille erfolgen. Wie zu erkennen ist, rollen die beiden Gelenkteile 12, 14 in diesem Fall an dem Anschlag 28 aneinander ab, während die jeweiligen geraden Flächen 36 voneinander abheben. Dabei wird das Federelement 16 weiterhin an den Hinterschneidungen 54 anliegen und so gegenüber der Verstaustellung weiter gedehnt.

Dadurch entsteht eine zusätzliche Rückstellkraft, welche das Brillengelenk 50 nach Beendigung des Pressen auf die Brille selbsttätig wieder in die Verstaustellung verstellt.

Da kein Achsstift vorhanden ist und das Federelement 16 dafür ausgelegt ist, eine solche zusätzliche Dehnung ohne Beschädigung aufzunehmen, wird das Brillengelenk 50 hierdurch nicht beschädigt und/oder dauerhaft verformt. Stattdessen justiert sich das Brillengelenk 50 aufgrund der durch das Federelement 16 gegeneinander gespannten Gelenkteile 12, 14 wieder selbsttätig an den geraden Flächen 36. Da die beiden Gelenkteile 12, 14 an dem Anschlag 28 abrollen und kein Bereich der Gelenkteile 12, 14 entsprechend unzulässig belastet wird, kann eine solche missbräuchliche Belastung vom Brillengelenk 50 ohne Weiteres aufgenommen werden.

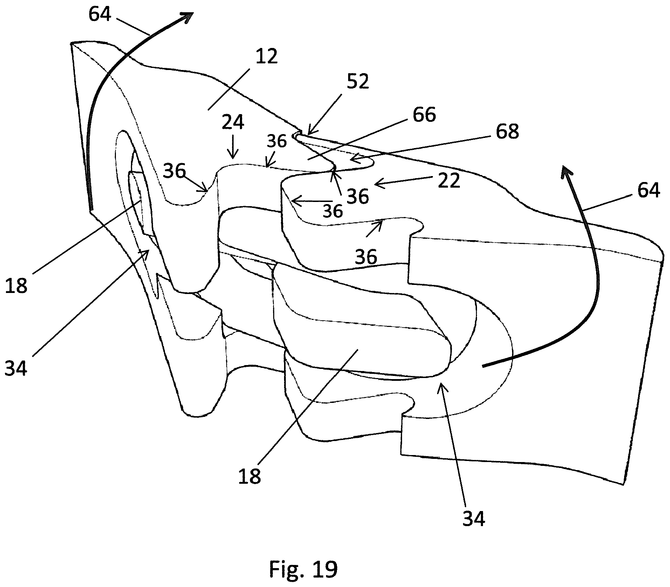

Fig. 19 zeigt das Brillengelenk 50 in einer überstreckten Stellung. Die beiden Gelenkteile 12, 14 sind hier über die Benutzungsstellung hinaus voneinander weg in Richtung der Pfeile 64 bewegt worden, wobei diese Bewegung immer noch in der Bewegungsebene zwischen der Verstaustellung und der Benutzungsstellung erfolgt ist. Eine solche Überstreckung kann beispielsweise durch ein seitliches Auflegen eines Kopfes auf einem Kissen bei aufgestezter Brille erfolgen. Wie zu erkennen ist, rollen die beiden Gelenkteile 12, 14 in diesem Fall an dem weiteren Anschlag 52 aneinander ab, während die jeweiligen geraden Flächen 36 voneinander abheben. Insbesondere gleitet ein keilförmiger Bereich 66 des Gelenkteils 12 an einer beim Anschlag 52 gebildeten korrespondierenden Aussparung 68 des Gelenkteils 14 ab. Dabei wird das Federelement 16 weiterhin am Boden der Nuten 34 anliegen und so gegenüber der Verstaustellung weiter gedehnt. Dadurch entsteht eine zusätzliche Rückstellkraft, welche das Brillengelenk 50 nach Beendigung der die Überstreckung bewirkenden Kraft selbsttätig wieder in die Benutzungsstellung verstellt. Entsprechend ist das Brillengelenk 50 auch vor einer Beschädigung durch Überstreckung geschützt und ist dabei leicht zu handhaben, da nach einer solchen missbräuchlichen Belastung keine Wartung erforderlich ist.

Wird das Brillengelenk 50 dabei so weit überstreckt, dass der keilförmige Bereich 66 vollständig aus der korrespondierenden Aussparung 68 gleitet, kommt es zudem zu einer zusätzlichen Entlastung des Brillengelenks 50. In diesem Fall kann das Gelenkteil 12 quasi von dem Gelenkteil 14 abspringen. Dadurch wird das Federelement ab diesem Punkt weniger stark gedehnt, so dass sowohl die Belastung der Gelenkteile 12, 14, insbesondere des dünnwandigen, der Nut 34 abgewandten Bereichs des Gelenkteils 14 des Anschlags 50, sinkt, als auch die des Federelements 16 selbst. Ein solcher Zustand kann auch als teilweise gelöste Gelenkverbindung verstanden werden, da die beiden Gelenkteile 12, 14 bei weiterer Überstreckung nun nicht mehr im Wesentlichen an dem Abrollbereich 22 und dem Aufnahmebereich 24 kontaktiert sind und dort entsprechend im Wesentlichen auch nicht mehr bei einer weiteren Überstreckung aneinander abrollen und/oder abgleiten.

Dadurch ist es möglich, dass Brillengelenk 50 ohne Beschädigung so weit aufzubiegen, bis die jeweiligen äußeren, der Nut 34 abgewandten Seiten der beiden Gelenkteile 12, 14 wenigstens bereichsweise aneinander anliegen. Je nach Vorspannung des Federelements 16 und Geometrien der Gelenkteile 12, 14 ist es dann gegebenenfalls notwendig, die teilweise gelöste Gelenkverbindung wieder manuell zu verbinden. Dies kann beispielsweise durch ein Zurückdrehen eines der beiden Gelenkteile 12, 14 in Richtung der Benutzungsstellung erfolgen, wobei der keilförmige Bereich 66 in die korrespondierende Aussparung 68 eingefädelt wird. Auch danach justiert sich das Brillengelenk 50 wieder von selbst. Entsprechend kann auch dieses teilweise manuelle Verbinden von einem Brillenbesitzer ohne Hilfe eines Optikers, Werkzeug und/oder zusätzliche Ausbildung intuitiv selber durchgeführt werden.

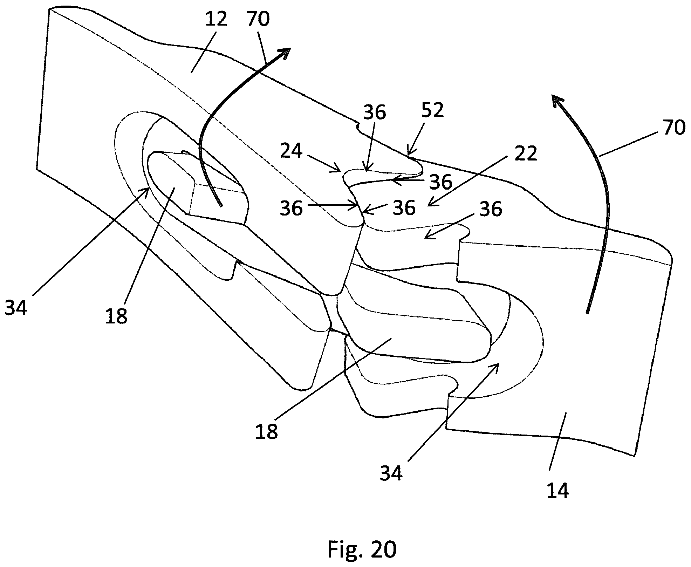

Fig. 20 zeigt das Brillengelenk 50 in einer nach oben aus der Bewegungsebene heraus rotierten Benutzungsstellung. Die beiden Gelenkteile 12, 14 sind hier aus der Bewegungsebene, welche durch eine direkte Verbindung zwischen der Verstaustellung und der Benutzungsstellung bzw. eine Schwenkbewegung zwischen diesen Stellung definiert sein kann, nach oben heraus in Richtung der Pfeile 70 bewegt worden. Ein solches Verbiegen kann beispielsweise durch eine versehentliche Belastung einer in Benutzungsstellung auf einem Tisch abgelegten Brille erfolgen.

Wie zu erkennen ist, rollen die beiden Gelenkteile 12, 14 in diesem Fall an Oberkante aneinander ab, während die jeweiligen geraden Flächen 36 erneut voneinander abheben. Dabei wird das Federelement 16 weiterhin am Boden der Nuten 34 anliegen und so gegenüber der Benutzungsstellung weiter gedehnt. Dadurch entsteht eine zusätzliche Rückstellkraft, welche das Brillengelenk 50 nach Beendigung des die Verbiegung bewirkenden Kraft selbsttätig wieder in die Benutzungsstellung verstellt. Entsprechend ist das Brillengelenk 50 auch vor einer Beschädigung durch Verbiegen aus der Bewegungsebene heraus geschützt und ist dabei leicht zu handhaben, da nach einer solchen missbräuchlichen Belastung keine Wartung erforderlich ist.

Ein solches Verbiegen kann auch kombiniert mit einer bereits beschriebenen Überstreckung und Überstauchung erfolgen, ohne dass dabei das Brillengelenk 50 beschädigt wird. Ebenso kann alternativ oder zusätzlich auch ein auseinander Ziehen der beiden Gelenkteile 12, 14 und/oder ein Rotieren jeweiliger Gelenkteile 12, 14 um deren Längsachse, welche durch eine Haupterstreckungsrichtung vorgegeben sein kann und/oder in der Bewegungsebene liegen kann, erfolgen, ohne dass dabei das Brillengelenk 50 beschädigt wird. In allen Fällen kann das Federelement 16 weiter gedehnt werden, so dass auch eine Rückstellkraft eine selbsttätige Rückkehr in eine Ausgangsstellung in der Bewegungsebene und in eine korrekte Ausrichtung der beiden Gelenkteile 12, 14 zueinander bewirkt, insbesondere in die Verstaustellung oder die Benutzungsstellung.

Selbstverständliche können auch die anderen Ausführungsformen (Brillengelenk 10, 100, 150) mit ihren jeweiligen Gelenkteilen 12, 14 analog zum Brillengelenk 50 überstreckt, überstaucht, verbogen, auseinander gezogen und/oder rotiert werden, ohne dass diese dabei beschädigt werden. Insbesondere können auch dort die Gelenkteile 12, 14 wieder selbsttätig in ihre Ausgangsstellung zurückkehren.

### Bezugszeichenliste

- 10: Brillengelenk
- 12: erstes Gelenkteil
- 14: zweites Gelenkteil
- 16: Federelement
- 18: Halteelement
- 20: Hinterschneidung
- 22: Abrollbereich
- 24: Aufnahmebereich
- 26: Pfeil
- 28: Anschlag
- 30: Pfeil
- 32: Bereich
- 34: Nut
- 36: gerade Fläche
- 50: Brillengelenk
- 52: Anschlag
- 54: Hinterschneidung
- 56: mittlere Lücke
- 58: gestrichelte Linie
- 60: gestrichelte Linie
- 62: Pfeil
- 64: Pfeil
- 66: keilförmiger Bereich
- 68: Aussparung
- 70: Pfeil
- 100: Brillengelenk
- 102: Federelement
- 104: Federelement
- 106: Aussparung
- 108: Vertiefung
- 110: Anschlag
- 112: Bereich
- 114: Auflageflächen

## Patentansprüche

1. Brillengelenk (10, 50, 100, 150) für ein Brillengestell mit einem ersten, einer Fassung des Brillengestells zugeordneten, Gelenkteil (12) und einem zweiten, einem Brillenbügel des Brillengestells zugeordneten, Gelenkteil (14), wobei die Gelenkteile (12, 14) mittels mindestens einem an beiden Gelenkteilen (12, 14) befestigten Federelement (16, 102, 104) beweglich miteinander verbunden sind, wobei das Federelement (16, 102, 104) ringförmig geschlossen und gummielastisch ausgebildet ist, wobei beide Gelenkteile (12, 14) jeweils ein zapfenartiges und/oder hakenartiges Halteelement (18) umfassen, um welches das Federelement (16, 102, 104) wenigstens bereichsweise geschlungen ist, wobei die jeweiligen Halteelemente mit den jeweiligen Gelenkteilen einstückig und/oder integral ausgebildet sind wobei eins der Gelenkteile (12, 14) einen Aufnahmebereich (24) aufweist, auf welchem ein korrespondierender Abrollbereich (22) des Anderen der Gelenkteile (12, 14) während einer Gelenkbewegung abrollt und/oder abgleitet, und
wobei der Aufnahmebereich (24) und/oder der Abrollbereich (22) jeweils wenigstens zwei Auflageflächen (36) aufweisen welche zueinander einen Winkel zwischen 75° und 105° aufweisen,
wobei das erste Gelenkteil (12) und das zweite Gelenkteil (14) wenigstens eine Aussparung (34, 106) aufweisen, in welcher das Federelement (16, 102, 104) und/oder das jeweilige Halteelement (18) wenigstens teilweise angeordnet ist.

2. Brillengelenk (10, 50, 100, 150) nach Anspruch 1, wobei
die beiden Gelenkteile (12, 14) durch das Federelement (16, 102, 104) zu deren beweglichen Verbinden gegeneinander gespannt sind.

3. Brillengelenk (10, 50) nach Anspruch 1, wobei
die Auflageflächen (36) im Wesentlichen plan sind, und/oder zueinander einen Winkel zwischen 87° und 93° aufweisen.

4. Brillengelenk (10, 50, 100, 150) nach einem der vorhergehenden Ansprüche, wobei
das Brillengelenk (10, 50, 100, 150) dazu ausgebildet ist, dass sich eines der Gelenkteile (12, 14) relativ zu dem Anderen der Gelenkteile (12, 14) im Wesentlichen in einer Bewegungsebene derart bewegen kann, dass das Brillengelenk (10, 50, 100, 150) zwischen einer Verstaustellung und einer Benutzungsstellung des Brillengestells (10, 50, 100, 150) verstellt werden kann.

5. Brillengelenk (10, 50, 100, 150) nach einem der vorhergehenden Ansprüche, wobei
die Gelenkteile (12, 14), insbesondere der Aufnahmebereich (24) und/oder der Abrollbereich (22), dazu ausgebildet sind, das Brillengelenk (10, 50, 100, 150) in der Verstaustellung und/oder der Benutzungsstellung zu stabilisieren, insbesondere mittels wenigstens eines Anschlags (28, 52, 110) und/oder Rastflächen (36) am Aufnahmebereich (24) und/oder Abrollbereich (22).

6. Brillengelenk (10, 50, 100, 150) nach einem der Ansprüche 4 oder 5, wobei
das Brillengelenk (10, 50, 100, 150) dazu ausgebildet ist, sich in einem ersten Gelenkstellungsbereich, insbesondere in einem ersten Winkelbereich in der Bewegungsebene, sich selbsttätig mittels des Federelements (16, 102, 104) in die Verstaustellung zu verstellen
und/oder
das Brillengelenk (10, 50, 100, 150) dazu ausgebildet ist, sich in einem zweiten Gelenkstellungsbereich, insbesondere in einem zweiten Winkelbereich in der Bewegungsebene, sich selbsttätig mittels des Federelements (16, 102, 104) in die Benutzungsstellung zu verstellen
und/oder
wobei das Brillengelenk (10, 50, 100, 150) dazu ausgebildet ist, eine Bewegung der Gelenkteile (12, 14) relativ zueinander in der Bewegungsebene über die Verstaustellung und/oder über die Benutzungsstellung hinaus zuzulassen, wobei das Brillengelenk (10, 50, 100, 150) dazu ausgebildet ist, selbsttätig mittels des Federelements (16, 102, 104) in die Verstaustellung respektive die Benutzungsstellung zurückzukehren.

7. Brillengelenk (10, 50, 100, 150) nach einem der vorhergehenden Ansprüche, wobei das Brillengelenk (10, 50, 100, 150) derart ausgebildet ist, dass sich das Federelement (16, 102, 106) bei Überschreitung eines maximal zulässigen Bewegungsbereichs in zumindest einem Freiheitsgrad selbsttätig von zumindest einem der Gelenkteile (12, 14) löst.

8. Brillengelenk (10, 50, 100, 150) nach einem der vorhergehenden Ansprüche, wobei das Federelement (16, 102, 104) lösbar mit dem ersten Gelenkteil (12) und/oder dem zweiten Gelenkteil (14) verbunden ist.

9. Brillengelenk (10, 50, 100, 150) nach einem der vorhergehenden Ansprüche, wobei die wenigstens eine Aussparung (34, 106) eine Nut (34, 106) und/oder eine Durchgangsöffnung aufweist.

10. Brillengelenk (10, 50, 100, 150) nach einem der vorhergehenden Ansprüche, wobei das erste Gelenkteil (12) und/oder das zweite Gelenkteil (14) wenigstens ein Auflageelement (54), insbesondere in Form einer Hinterschneidung (54) an einer Aussparung (34), aufweist, an welchem sich das Federelement (16) nur in einem bestimmten Gelenkstellungsbereich abstützt.

11. Brillengelenk (100, 150) nach einem der vorhergehenden Ansprüche, wobei
die Gelenkteile (12, 14) mittels wenigstens zwei jeweils an beiden Gelenkteilen (12, 14) befestigter Federelemente (102, 104) beweglich miteinander verbunden sind,
wobei wenigstens zwei Federelemente (102, 104) gemeinsam in einer Aussparung (106) an dem ersten Gelenkteil (12) und/oder dem zweiten Gelenkteil (14) angeordnet sind und/oder
wobei eines der wenigstens zwei Federelemente (102, 104) bei gleicher Dehnung eine andere Spannung aufweist als ein Anderes der wenigstens zwei Federelemente (102, 104).

12. Brillengelenk (100, 150) nach einem der vorhergehenden Ansprüche, wobei das Federelement aus einem Gummiwerkstoff gebildet ist.

13. Gelenkset zum konfigurierbaren Bilden eines Brillengelenks (10, 50, 100, 150) nach einem der vorhergehenden Ansprüche, wobei
das Gelenkset mehrere unterschiedliche Federelemente (16, 102, 104) umfasst, welche zum Konfigurieren des zu bildenden Brillengelenks (10, 50, 100, 150) auswählbar sind, wobei sich die unterschiedlichen Federelemente (16, 102, 104) insbesondere hinsichtlich ihrer Spannung bei gleicher Dehnung unterscheiden und/oder hinsichtlich ihrer Länge in einem ungedehnten Zustand,
und/oder
das Gelenkset mehrere unterschiedliche erste Gelenkteile (12) und/oder mehrere unterschiedliche zweite Gelenkteile (14) umfasst, welche zum Konfigurieren des zu bildenden Brillengelenks (10, 50, 100, 150) auswählbar sind, wobei sich die unterschiedlichen ersten und/oder unterschiedlichen zweiten Gelenkteile (12, 14) insbesondere hinsichtlich einer Geometrie ihres Aufnahmebereichs (24) bzw. Abrollbereichs (22) unterscheiden.

14. Brillengestell mit einer Fassung für wenigstens ein Brillenglas, zwei Brillenbügel und zwei Brillengelenken (10, 50, 100, 150) nach jeweils einem der Ansprüche 1 bis 12, wobei jeder Brillenbügel mittels jeweils eines der beiden Brillengelenke (10, 50, 100, 150) mit der Fassung beweglich verbunden ist.

## Claims

1. Eyeglass joint (10, 50, 100, 150) for an eyeglass frame with a first joint part (12) assigned to a rim of the eyeglass frame, and a second joint part (14) assigned to an eyeglass temple of the eyeglass frame, wherein the joint parts (12, 14) are movably connected to each other by means of at least one spring element (16, 102, 104), wherein the spring element (16, 102, 104) has a closed ring shape and is rubber-elastic, wherein both joint parts (12, 14) each comprise a cone-shaped and/or hook-shaped retaining element (18), around which the spring element (16, 102, 104) is at least portion-wise looped, wherein the respective retaining elements are formed as one piece and/or integrally with the respective joint parts (12, 14), wherein one of the joint parts (12, 14) comprises a receiving portion (24) on which a corresponding rolling portion (22) of the other one of the joint parts (12, 14) rolls and/or slides during a joint movement, and
wherein the receiving portion (24) and/or the rolling portion (22) each comprise at least two support surfaces (36) which are at an angle of between 75° and 105° to one another,
wherein the first joint part (12) and the second joint part (14) comprise at least one recess (34, 106) in which the spring element (16, 102, 104) and/or the respective retaining element (18) are at least partially arranged.

2. Eyeglass joint (10, 50, 100, 150) according to claim 1, wherein
the two joint parts (12, 14) are tensioned against each other by the spring element (16, 102, 104) such that they are movably connected.

3. Eyeglass joint (10, 50) according to claim 1, wherein
the support surfaces (36) are substantially flat and/or are at an angle of between 87° and 93°.

4. Eyeglass joint (10, 50, 100, 150) according to any of the preceding claims, wherein
the eyeglass joint (10, 50, 100, 150) is configured such that one of the joint parts (12, 14) can move relatively to the other one of the joint parts (12, 14) substantially in a movement plane such that the eyeglass joint (10, 50, 100, 150) can be adjusted between a stowage position and a use position of the eyeglass frame (10, 50, 100, 150).

5. Eyeglass joint (10, 50, 100, 150) according to any of the preceding claims, wherein
the joint parts (12, 14), in particular the receiving portion (24) and/or the rolling portion (22), are configured to stabilize the eyeglass joint (10, 50, 100, 150) in the stowage and/or the use position, in particular by means of at least one stop (28, 52, 110) and/or engaging surfaces (36) at the receiving portion (24) and/or rolling portion (22).

6. Eyeglass joint (10, 50, 100, 150) according to any of claims 4 or 5, wherein
the eyeglass joint (10, 50, 100, 150) is configured to automatically adjust into the stowage position in a first joint position range, in particular in a first angular range in the movement plane, by means of the spring element (16, 102, 104) and/or
the eyeglass joint (10, 50, 100, 150) is configured to automatically adjust into the use position in a second joint position range, in particular in a second angular range in the movement plane, by means of the spring element (16, 102, 104) and/or
wherein the eyeglass joint (10, 50, 100, 150) is configured to allow a movement of the joint parts (12, 14) relative to each other in the movement plane beyond the stowage position and/or beyond the use position, wherein the eyeglass joint (10, 50, 100, 150) is configured to automatically return to the stowage position and the use position, respectively, by means of the spring element (16, 102, 104).

7. Eyeglass joint (10, 50, 100, 150) according to any of the preceding claims, wherein
the eyeglass joint (10, 50, 100, 150) is configured such that the spring element (16, 102, 104) automatically detaches from at least one of the joint parts (12, 14) when a maximum permissible movement range is exceeded in at least one degree of freedom.

8. Eyeglass joint (10, 50, 100, 150) according to any of the preceding claims, wherein
the spring element (16, 102, 104) is detachably connected with the first joint part (12) and/or the second joint part (14).

9. Eyeglass joint (10, 50, 100, 150) according to any of the preceding claims, wherein
the at least one recess (34, 106) comprises a groove (34, 106) and/or a through opening.

10. Eyeglass joint (10, 50, 100, 150) according to any of the preceding claims, wherein
the first joint part (12) and/or the second joint part (14) comprise at least one support element (54), in particular in the form of an undercut (54) at a recess (34), on which the spring element (16) is supported only in a certain joint position range.

11. Eyeglass joint (100, 150) according to any of the preceding claims, wherein
the joint parts (12, 14) are movably connected to each other by means of at least two spring elements (102, 104), each being attached to both joint parts (12, 14),
wherein at least two spring elements (102, 104) are arranged together in a recess (106) on the first joint part (12) and/or the second joint part (14), and/or
wherein at the same elongation, one of the at least two spring elements (102, 104) has a different tension than another of the at least two spring elements (102, 104).

12. Eyeglass joint (100, 150) according to any of the preceding claims
wherein the spring element is formed from a rubber material.

13. Joint set for the configurable forming of an eyeglass joint (10, 50, 100, 150) according to one of the preceding claims, wherein
the joint set comprises several different spring elements (16, 102, 104) which can be selected to configure the eyeglass joint (10, 50, 100, 150) to be formed, wherein the different spring elements (16, 102, 104) differ in particular in their tension at the same elongation and/or in their length in an non-elongated state and/or
the joint set comprises several different first joint parts (12) and/or several different second joint parts (14) which can be selected to configure the eyeglass joint (10, 50, 100, 150) to be formed, wherein the different first and/or the different second joint parts (12, 14) differ in particular in the geometry of their receiving portion (24) and/or their rolling portion (22).

14. Eyeglass frame comprising a rim for at least one lens, two eyeglass temples and two eyeglass joints (10, 50, 100, 150) according to one of claims 1 to 12, wherein each eyeglass temple is movably connected with the rim by means of one of the two eyeglass joints (10, 50, 100, 150).

## Revendications

1. Articulation de lunettes (10, 50, 100, 150) pour une monture de lunettes avec une première partie d'articulation (12) correspondant à une armature de la monture de lunettes et une deuxième partie d'articulation (14) correspondant à un étrier de lunettes de la monture de lunettes, dans laquelle les parties d'articulation (12, 14) sont reliées entre elles de manière mobile au moyen d'au moins un élément ressort (16, 102, 104) fixé aux deux parties d'articulation (12, 14), dans laquelle l'élément ressort (16, 102, 104) est fermé de manière annulaire et est réalisé de manière élastique en caoutchouc, dans laquelle les deux parties d'articulation (12, 14) comprennent chacune un élément de maintien (18) en forme de tenon et/ou de crochet, autour duquel l'élément ressort (16, 102, 104) est enroulé au moins à certains endroits, dans laquelle les éléments de maintien correspondants sont réalisés d'une seule pièce et/ou de manière intégrée avec les parties d'articulation (12, 14) correspondantes, dans laquelle une des parties d'articulation (12, 14) comprend une partie de logement (24), sur lequel roule et/ou glisse, pendant un mouvement de l'articulation, une partie de roulement (22) correspondante de l'autre partie d'articulation (12, 14) et
dans laquelle la partie de logement (24) et/ou la partie de roulement (22) comprennent chacune au moins deux surfaces d'appui (36) qui présentent entre elles un angle entre 75° et 105°,
dans laquelle la première partie d'articulation (12) et la deuxième partie d'articulation (14) comprennent au moins un évidement (34, 106) dans lequel l'élément ressort (16, 102, 104) et/ou l'élément de maintien (18) correspondant est disposé au moins partiellement.

2. Articulation de lunettes (10, 50, 100, 150) selon la revendication 1, dans laquelle
les deux parties d'articulation (12, 14) sont serrées l'une contre l'autre par l'élément ressort (16, 102, 104) pour leur liaison mobile.

3. Articulation de lunettes (10, 50) selon la revendication 1, dans laquelle
les surfaces d'appui (36) sont globalement planes et/ou présentent entre elles un angle entre 87° et 93°.

4. Articulation de lunettes (10, 50, 100, 150) selon l'une des revendications précédentes, dans laquelle l'articulation de lunettes (10, 50, 100, 150) est conçu de façon à ce qu'une des parties d'articulation (12, 14) puisse se déplacer par rapport à l'autre partie d'articulation (12, 14) globalement dans un plan de mouvement, de façon à ce que l'articulation de lunettes (10, 50, 100, 150) puisse être déplacée entre une position de rangement et une position d'utilisation de la monture de lunettes (10, 50, 100, 150).

5. Articulation de lunettes (10, 50, 100, 150) selon l'une des revendications précédentes, dans laquelle les parties d'articulation (12, 14), plus particulièrement la partie de logement (24) et/ou la partie de roulement (22), sont conçues pour stabiliser l'articulation de lunettes (10, 50, 100, 150) dans la position de rangement et/ou la position d'utilisation, plus particulièrement au moyen d'au moins une butée (28, 52, 110) et/ou de surfaces d'encliquetage (36) sur la partie de logement (24) et/ou la partie de roulement (22).

6. Articulation de lunettes (10, 50, 100, 150) selon l'une des revendications 4 ou 5, dans laquelle l'articulation de lunettes (10, 50, 100, 150) est conçue pour se déplacer, dans une première plage de positions d'articulation, plus particulièrement dans une première plage angulaire dans le plan de mouvement, automatiquement au moyen de l'élément ressort (16, 102, 104) vers la position de rangement
et/ou
l'articulation de lunettes (10, 50, 100,150) est conçue pour se déplacer, dans une deuxième plage de positions d'articulation, plus particulièrement dans une deuxième plage angulaire dans le plan de mouvement, automatiquement au moyen de l'élément ressort (16, 102, 104) vers la position d'utilisation
et/ou
dans laquelle l'articulation de lunettes (10, 50, 100, 150) est conçue pour permettre un mouvement des parties d'articulations (12, 14) l'une par rapport à l'autre dans le plan de mouvement au-delà de la position de rangement et/ou de la position d'utilisation, dans laquelle l'articulation de lunettes (10, 50, 100,150) est conçue pour retourner automatiquement, au moyen de l'élément ressort (16, 102, 104), vers la position de rangement respectivement la position d'utilisation.

7. Articulation de lunettes (10, 50, 100, 150) selon l'une des revendications précédentes, dans laquelle l'articulation de lunettes (10, 50, 100, 150) est conçu de façon à ce que l'élément ressort (16, 102, 104) se détache automatiquement d'au moins une des parties d'articulation (12, 14) lors du dépassement d'une plage de mouvement maximale admissible dans au moins un degré de liberté.

8. Articulation de lunettes (10, 50, 100, 150) selon l'une des revendications précédentes, dans laquelle l'élément ressort (16, 102, 104) est relié de manière amovible avec la première partie d'articulation (12) et/ou la deuxième partie d'articulation (14).

9. Articulation de lunettes (10, 50, 100, 150) selon l'une des revendications précédentes, dans laquelle ledit au moins un évidement (34, 106) comprend une rainure (34, 106) et/ou une ouverture de passage.

10. Articulation de lunettes (10, 50, 100, 150) selon l'une des revendications précédentes, dans laquelle la première partie d'articulation (12) et/ou la deuxième partie d'articulation (14) comprend au moins un élément d'appui (54), plus particulièrement sous la forme d'une contre-dépouille (54) au niveau d'un évidement (34), contre lequel l'élément ressort (16) s'appuie uniquement dans une plage de positions d'articulation déterminée.

11. Articulation de lunettes (100, 150) selon l'une des revendications précédentes, dans laquelle les parties d'articulation (12, 14) sont reliées entre elles de manière mobile au moyen d'au moins deux éléments ressorts (102, 104) fixés chacun aux deux parties d'articulation (12, 14), dans laquelle au moins deux éléments ressorts (102, 104) sont disposés conjointement dans un évidement (106) sur la première partie d'articulation (12) et/ou la deuxième partie d'articulation (14) et/ou
dans laquelle un des au moins deux éléments ressorts (102, 104), pour la même dilatation, présente un serrage différent d'un autre des au moins deux éléments ressorts (102, 104).

12. Articulation de lunettes (100, 150) selon l'une des revendications précédentes, dans laquelle l'élément ressort est constitué d'un matériau de type caoutchouc.

13. Kit d'articulation pour la formation configurable d'une articulation de lunettes (10, 50, 100, 150) selon l'une des revendications précédentes, dans laquelle
le kit d'articulation comprend plusieurs éléments ressorts (16, 102, 104) différents, qui peuvent être sélectionnés pour la configuration de l'articulation de lunettes (10, 50, 100, 150) à former, dans laquelle les différents éléments ressorts (16, 102, 104) se différencient plus particulièrement en ce qui concerne leur serrage pour la même dilatation et/ou en ce qui concerne leur longueur dans un état non dilaté
et/ou
le kit d'articulation comprend plusieurs différentes premières parties d'articulation (12) et/ou plusieurs différentes deuxièmes parties d'articulation (14), qui peuvent être sélectionnées pour la configuration de l'articulation de lunettes (10, 50, 100, 150) à former, dans laquelle les différentes premières et/ou différentes deuxièmes parties d'articulation (12, 14) se différencient plus particulièrement en ce qui concerne une géométrie de leur partie de logement (24) resp. partie de roulement (22).

14. Monture de lunettes avec une armature pour au moins un verre de lunettes, deux étriers de lunettes et deux articulations de lunettes (10, 50, 100, 150) selon l'une des revendications 1 à 12, dans laquelle chaque étrier de lunettes est relié chacun de manière mobile avec l'armature au moyen des deux articulations de lunettes (10, 50, 100, 150).
